# EUROPEAN PATENT SPECIFICATION

(11) **EP 2 466 921 B1**
(45) Date of publication and mention of the grant of the patent: **03.07.2019**
(21) Application number: 11008832.5
(22) Date of filing: 07.11.2011
(51) Int. Cl.: H04W 4/21, H04L 29/08, H04L 12/18, H04W 4/00, H04W 4/02, H04W 4/06, H04L 29/06

(54) **Mobile terminal and screen data sharing application controlling method thereof**
Tragbares Endgerät und entsprechendes Steuerungsverfahren einer Anwendung zum Austausch von angezeigten Daten
Terminal mobile et son procédé de contrôle d'application de partage de données affichées

(30) Priority: 20.12.2010 KR 20100130649
(43) Date of publication of application: 20.06.2012
(73) Proprietor: LG Electronics Inc., Seoul 150-721 (KR)
(72) Inventor: Hong, Jipyo, Seoul 153-801 (KR); Lee, Joowoo, Seoul 153-801 (KR)
(74) Representative: Beyer, Andreas

(56) References cited:
- WO-A1-2006/010977
- GB-A- 2 470 811
- US-A- 5 760 769
- US-A1- 2006 010 392
- US-A1- 2009 254 842
- US-A1- 2009 327 885
- US-A1- 2010 082 784
- US-A1- 2010 299 060

## Description

### CROSS-REFERENCE TO RELATED APPLICATIONS

This application claims the benefit of earlier filing date and right of priority to Korean Application No. 10-2010-0130649, filed on December 20, 2010.

### BACKGROUND OF THE INVENTION

### Field of the Invention

The present invention relates to a mobile terminal, and more specifically, to a mobile terminal and application sharing method thereof.

### Discussion of the Related Art

A mobile terminal is a device which may be configured to perform various functions. Examples of such functions include data and voice communications, capturing images and video via a camera, recording audio, outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. Additionally, the mobile terminals can be further classified into handheld terminals and vehicle mount terminals according to their portability.

In many configurations, when a user operates a plurality of terminals, the application settings and operations of the plurality of terminals may be controlled via one of the plurality of terminals.

Alternatively, when a plurality of terminals are operated by multiple users, respectively, the application setting and operations for each of a plurality of the terminals may be controlled via one of the plurality of terminals.

However, such terminals generally do not include a method for sharing applications and application information among a plurality of terminals, or methods for enabling a specific terminal to control settings and operations of the plurality of terminals.

US 2010/082784 A1 discloses a method for using at least one resource of a variety of electronic devices from another electronic device including receiving resource-sharing information associated with a resource-sharing electronic device via near field communication, determining a resource-sharing scheme for using the resources of the resource-sharing electronic device based on the resource-sharing information, and sharing at least one resource of the resource-sharing electronic device using the determined resource-sharing scheme.

GB 2 470 811 A discloses that a sharing device displays a list of one or more applications which are available to share with other devices, and receives a selection, at the sharing device, of an application to share with a receiving device from the list of applications. The sharing device determines the sharing preferences of the selected application, creates an application package at the sharing device, based on the sharing preferences, and establishes a network connection from the sharing device to the receiving device. The application package is then transmitted from the sharing device to the receiving device via the network connection.

WO 2006/010977 A1 discloses generating a list of devices in physical proximity of each other and utilizing said list, for example, for sharing of content between a plurality of mobile devices applying individual media items such as address book entries, calendar entries, and/or Short Messaging Services (SMS) or Multimedia Messaging Services (MMS) messages.

US 2009/327885 A1 discloses a system and method that includes capturing content active in a device, identifying at least one target device to which the captured content is to be uploaded, and automatically uploading the content to the at least one other target device if a content sharing module in the device is active.

US 2010/299060 A1 discloses a rule-based location sharing. A location determining device, such as a Global Positioning System (GPS) enabled device, may receive a request to share the location. A rule may be used to determine whether to share the location with the requestor. If the rule allows the location to be shared, the location may be sent to the requestor. The location may be relayed through a third party server, which may be operative to evaluate the rule before sharing the location with the requestor.

It is an object of the present invention to provide an improved method of sharing an application between mobile terminals. It is further an object of the present invention to provide a mobile terminal using said improved method.

### SUMMARY

The above objects are solved by the claimed matter according to the independent mobile terminal claim 1 and the independent method claim 10. Advantageous embodiments are defined by the dependent claims.

A mobile terminal is presented. The mobile terminal includes a wireless communication unit configured to wirelessly communicate with at least one other terminal; a touch-screen configured to display information related to the mobile terminal; and a controller configured to identify the at least one other terminal as a sharing terminal within a predetermined distance of the mobile terminal and to pair the sharing terminal with the mobile terminal, wherein the controller is further configured to: control the touch-screen to display a sharing condition User Interface (Ul) that facilitates setting at least one sharing condition, the at least one sharing condition including a sharing time period for sharing information of a first application; control the wireless communication to share the information of the first application with the sharing terminal during the sharing time period set via the UI;control the touch-screen to display a first indicator by using information of the first application on a home screen, the first indicator distinguishing the first application that is shared between the mobile terminal and the sharing terminal and identifying the first application and the sharing terminal; control the touch-screen to display a sharing icon on the home screen; when the first indicator is touched and dragged into the sharing icon, control the wireless communication unit to share the first application corresponding to the first indicator with the sharing terminal; control the touch-screen to display, on the home screen, first text information indicating that the first application corresponding to the first indicator is shared with the sharing terminal; control the touch-screen to display a window on the home screen in response to a selection of the sharing icon, the window including the first indicator and second indicator corresponding to second application pre-shared with the sharing terminal; and when one of the first and second indicators within the window is touched and dragged toward an outside of the window, cancel the sharing of a shared application corresponding to the touched and dragged indicator; and when the sharing of the shared application corresponding to the touched and dragged indicator is cancelled, control the touch-screen to stop the displaying of the window on the home screen, to display the touched and dragged indicator on the home screen, and to display second text information indicating that the sharing of the shared application corresponding to the touched and dragged indicator is cancelled.

According to a feature, the mobile terminal is further configured to share a screen with the sharing terminal, the controller controls the display unit to display the shared screen of the sharing terminal on the mobile terminal and the controller controls the display unit to display an icon to distinguish the shared screen of the sharing terminal.

According to yet another feature, a second application is simultaneously downloaded on the paired sharing terminal when the mobile terminal downloads the second application.

According to still yet another feature, a second application is accessed by the paired sharing terminal when a user selects a sharing icon which appears after the second application has been downloaded.

According to a feature, the controller identifies the sharing terminal and pairs the mobile terminal and the sharing terminal during start-up of the mobile terminal. According to yet another feature, the controller identifies the sharing terminal and pairs the mobile terminal and the sharing terminal after executing the first application on the mobile terminal.

According to still yet another feature, the mobile terminal may control a second application on the paired sharing terminal when the second application is only installed on the sharing terminal.

According to a feature, the controller configured to download and install a second application on the mobile terminal, and to control the display unit to display an icon for the downloaded second application on the mobile terminal and a sharing icon associated with the second application after the second application is installed, wherein the paired sharing terminal is given access to the second application when a user selects the sharing icon.

The invention is also related to a corresponding method of sharing application information on a mobile terminal as presented above.

These and other embodiments will also become readily apparent to those skilled in the art from the following detailed description of the embodiments having reference to the attached figures, the invention not being limited to any particular embodiment disclosed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
- FIG. 1: illustrates a block diagram of a mobile terminal according to an embodiment of the present invention.
- FIG. 2: illustrates a system for sharing application information among a plurality of terminals according to an embodiment of the present invention.
- FIG. 3: illustrates a flowchart for a method of controlling an application in a mobile terminal according to an embodiment of the present invention.
- FIGs. 4A to 4C: illustrate screen configurations for designating a sharing target device according to an embodiment of the present invention.
- FIGs. 5A to 5H: illustrate screen configurations for setting a sharing condition according to an embodiment of the present invention.
- FIGs. 6A to 6D and FIGs. 7A and 7B: illustrate configurations for identifiably displaying application icons corresponding to a plurality of sharing devices according to an embodiment of the present invention.
- FIGs. 8A and 8B: illustrate configurations for displaying an application icon associated with a device according to an embodiment of the present invention.
- FIGs. 9A and 9B: illustrate configurations for displaying an application icon corresponding to a sharing user according to an embodiment of the present invention.
- FIGs. 10A and 10B: illustrate configurations for displaying an application icon in response to selecting a specific sharing device or a specific sharing user according to an embodiment of the present invention.
- FIGs. 11A to 11C: illustrate configurations for displaying a sharing icon according to an embodiment of the present invention.
- FIGs. 12A to 12C: illustrate configurations for displaying a shared application icon according to an embodiment of the present invention.
- FIGs. 13A to 13C: illustrate configurations for sharing an application according to an embodiment of the present invention.
- FIGs. 14A to 14C: illustrate configurations for canceling the sharing of an application according to an embodiment of the present invention.
- FIGs. 15A and 15B: illustrate configurations for designating a sharing target device according to an embodiment of the present invention.
- FIGs. 16A and 16B: illustrate configuration for controlling an application on a sharing target device according to an embodiment of the present invention.

### DETAILED DESCRIPTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes "module," "unit," and "part" are used for elements in order to facilitate the disclosure only. Therefore, significant meanings or roles are not given to the suffixes themselves and it is understood that the "module," "unit," and "part" can be used together or interchangeably.

Mobile terminals described in this disclosure can include a mobile phone, a smart phone, a laptop computer, a digital broadcast terminal, a PDA (personal digital assistant), a PMP (portable multimedia player), and a navigation system.

Except where applicable to a mobile terminal only, it will be appreciated by those skilled in the art that features described herein with reference to one or more embodiments may be applicable to a stationary terminal such as a digital TV, or a desktop computer.

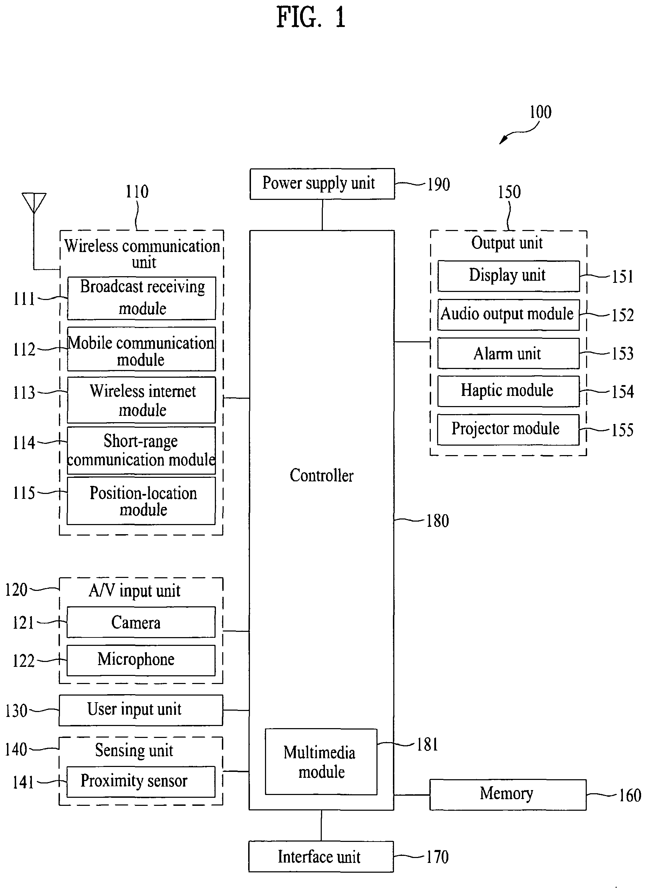

FIG. 1 is a block diagram of a mobile terminal 100 according to one embodiment of the present invention. Referring to FIG. 1, the mobile terminal 100 includes a wireless communication unit 110, an A/V (audio/video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. More or fewer components may be implemented according to various embodiments.

The wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and/or a terrestrial channel.

The broadcast managing server is generally a server which generates and transmits a broadcast signal and/or broadcast associated information or a server which is provided with a previously generated broadcast signal and/or broadcast associated information and then transmits the provided signal or information to a terminal. The broadcast signal and/or broadcast associated information received by the broadcast receiving module 111 may be stored in a suitable device, such as a memory 160.

The broadcast signal may be implemented as a TV broadcast signal, a radio broadcast signal, and/or a data broadcast signal, among other signals. If desired, the broadcast signal may further include a broadcast signal combined with a TV or radio broadcast signal.

The broadcast associated information includes information associated with a broadcast channel, a broadcast program, or a broadcast service provider. Furthermore, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of a digital multimedia broadcasting (DMB) system and an electronic service guide (ESG) of a digital video broadcast-handheld (DVB-H).

The broadcast receiving module 111 may be configured to receive broadcast signals transmitted from various types of broadcast systems. By nonlimiting example, such broadcasting systems may include a digital multimedia broadcasting-terrestrial (DMB-T) system, a digital multimedia broadcasting-satellite (DMB-S) system, DVB-H, the data broadcasting system known as media forward link only (MediaFLO™) and an integrated services digital broadcast-terrestrial (ISDB-T) system. Optionally, the broadcast receiving module 111 can be configured to be suitable for other broadcasting systems as well as the above-noted digital broadcasting systems.

The mobile communication module 112 transmits/receives wireless signals to/from one or more network entities (e.g., a base station, an external terminal, and/or a server). Such wireless signals may carry audio, video, and data according to text/multimedia messages.

The wireless Internet module 113 supports Internet access for the mobile terminal 100. This module may be internally or externally coupled to the mobile terminal 100. The wireless Internet technology can include WLAN (Wireless LAN), Wi-Fi, Wibro™ (Wireless broadband), Wimax™ (World Interoperability for Microwave Access), and HSDPA (High Speed Downlink Packet Access).

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth™ and ZigBee™, to name a few.

The position-location module 115 identifies or otherwise obtains the location of the mobile terminal 100. According to one embodiment, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes (or produces) image frames of still pictures or video, which are obtained by an image sensor in a video call mode or a photographing mode. Furthermore, the processed image frames can be displayed on the display unit 151.

The image frames processed by the camera 121 can be stored in the memory 160 or can be transmitted to an external recipient via the wireless communication unit 110. Optionally, at least two cameras 121 can be provided in the mobile terminal 100 according to the environment of usage.

The microphone 122 receives an external audio signal while the portable device is in a particular mode, such as phone call mode, recording mode and voice recognition mode. This audio signal is processed and converted into electronic audio data. The processed audio data is transformed into a format transmittable to a mobile communication base station via the mobile communication module 112 in a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, and a jog switch.

The sensing unit 140 provides sensing signals for controlling operations of the mobile terminal 100 using status measurements of various aspects of the mobile terminal. For instance, the sensing unit 140 may detect an open/closed status of the mobile terminal 100, the relative positioning of components (e.g., a display and keypad) of the mobile terminal 100, a change of position (or location) of the mobile terminal 100 or a component of the mobile terminal 100, a presence or absence of user contact with the mobile terminal 100, and an orientation or acceleration/deceleration of the mobile terminal 100.

As an example, a mobile terminal 100 configured as a slide-type mobile terminal is considered. In this configuration, the sensing unit 140 may sense whether a sliding portion of the mobile terminal is open or closed. According to other examples, the sensing unit 140 senses the presence or absence of power provided by the power supply 190, and the presence or absence of a coupling or other connection between the interface unit 170 and an external device. According to one embodiment, the sensing unit 140 can include a proximity sensor 141 and a motion sensor 142.

The motion sensor 142 detects a body motion of the mobile terminal 100. The motion sensor 142 outputs a signal corresponding to the detected body motion to the controller 180.

The output unit 150 generates output relevant to the senses of sight, hearing, and touch. Furthermore, the output unit 150 includes the display unit 151, an audio output module 152, an alarm unit 153, a haptic module 154, and a projector module 155.

The display unit 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images which are associated with these modes, the UI or the GUI.

The display module 151 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can be implemented as a transparent or optically transmissive type, i.e., a transparent display. A representative example of the transparent display is a TOLED (transparent OLED). A rear configuration of the display unit 151 can be implemented as the optically transmissive type as well. In this configuration, a user may be able to see an object located at the rear of a terminal body on a portion of the display unit 151 of the terminal body.

At least two display units 151 can be provided in the mobile terminal 100 in accordance with one embodiment of the mobile terminal 100. For instance, a plurality of display units can be arranged to be spaced apart from each other or to form a single body on a single face of the mobile terminal 100. Alternatively, a plurality of display units can be arranged on different faces of the mobile terminal 100.

If the display unit 151 and a sensor for detecting a touch action (hereinafter called 'touch sensor') is configured as a mutual layer structure (hereinafter called 'touchscreen'), the display unit 151 is usable as an input device as well as an output device. In this case, the touch sensor can be configured as a touch film, a touch sheet, or a touchpad.

The touch sensor can be configured to convert pressure applied to a specific portion of the display unit 151 or a variation of capacitance generated from a specific portion of the display unit 151 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 180. Therefore, the controller 180 is made aware when a prescribed portion of the display unit 151 is touched.

Referring to FIG. 1, a proximity sensor 141 can be provided at an internal area of the mobile terminal 100 enclosed by the touchscreen or around the touchscreen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 141 is more durable than a contact type sensor and also has utility broader than the contact type sensor.

The proximity sensor 141 can include one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touchscreen includes the electrostatic capacity proximity sensor, it is configured to detect the proximity of a pointer using a variation of an electric field according to the proximity of the pointer. In this configuration, the touchscreen (touch sensor) can be considered as the proximity sensor 141.

In the following description, for purposes of clarity, an action in which a pointer approaches the touchscreen without contacting the touchscreen will sometimes be referred to as a "proximity touch." Furthermore, an action in which a pointer actually touches the touchscreen will sometimes be referred to as a "contact touch." The position on the touchscreen that is proximity-touched by the pointer refers to the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state). Information corresponding to the detected proximity touch action and the detected proximity touch pattern can be output to the touchscreen.

The audio output module 152 functions in various modes including a call-receiving mode, a call-placing mode, a recording mode, a voice recognition mode, and a broadcast reception mode to output audio data which is received from the wireless communication unit 110 or is stored in the memory 160. During operation, the audio output module 152 outputs audio relating to a particular function (e.g., call received, message received). The audio output module 152 may be implemented using one or more speakers, buzzers, other audio producing devices, and combinations thereof.

The alarm unit 153 outputs a signal for announcing the occurrence of a particular event associated with the mobile terminal 100. Typical events include a call received, a message received and a touch input received. The alarm unit 153 is able to output a signal for announcing the event occurrence by way of vibration as well as video or audio signal. The video or audio signal can be output via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. The strength and pattern of the vibration generated by the haptic module 154 are controllable. For instance, different vibrations can be output in a manner of being synthesized together or can be output in sequence.

The haptic module 154 is able to generate various tactile effects in addition to the vibration. For instance, the haptic module 154 may generate an effect attributed to an arrangement of pins vertically moving against a contacted skin surface, an effect attributed to an injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 154 can be implemented to enable a user to sense the tactile effect through a muscle sense of a finger or an arm as well as to transfer the tactile effect through direct contact. Optionally, at least two haptic modules 154 can be provided in the mobile terminal 100 in accordance with one embodiment of the mobile terminal 100.

The projector module 155 is an element for performing an image projector function using the mobile terminal 100. The projector module 155 is able to display an image, which is identical to or at least partially different from the image displayed on the display unit 151, on an external screen or wall according to a control signal of the controller 180.

In particular, the projector module 155 can include a light source generating light (e.g., a laser) for projecting an external image, an image producing means for producing an external image to project using the light generated from the light source, and a lens for enlarging the external image according to a predetermined focal distance. Furthermore, the projector module 155 can further include a device for adjusting an image projection direction by mechanically moving the lens or the whole module.

The projector module 155 can be a CRT (cathode ray tube) module, an LCD (liquid crystal display) module, or a DLP (digital light processing) module according to a device type. In particular, the DLP module is operated by enabling the light generated from the light source to reflect on a DMD (digital micro-mirror device) chip and can be advantageous for reducing the size of the projector module 155.

In many configurations, the projector module 155 can be provided in a lengthwise direction of a lateral, front or backside direction of the mobile terminal 100. Furthermore, it is understood that the projector module 155 can be provided in any portion of the mobile terminal 100 as deemed necessary.

The memory 160 is generally used to store various types of data to support the processing, control, and storage requirements of the mobile terminal 100. Examples of such data include program instructions for applications operating on the mobile terminal 100, contact data, phonebook data, messages, audio, still pictures, and moving pictures. Furthermore, a recent use history or a cumulative use frequency of each data (e.g., use frequency for each phonebook, each message or each multimedia file) can be stored in the memory 160. Moreover, data for various patterns of vibration and/or sound output in response to a touch input to the touchscreen can be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, or XD memory), or other similar memory or data storage device. Furthermore, the mobile terminal 100 is able to operate in association with a web storage for performing a storage function of the memory 160 on the Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the mobile terminal 100 and can include a User Identity Module (UIM), a Subscriber Identity Module (SIM), and/or a Universal Subscriber Identity Module (USIM). A device having the identity module (hereinafter called 'identity device') can be manufactured as a smart card. Therefore, the identity device is connectable to the mobile terminal 100 via the corresponding port.

When the mobile terminal 110 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 controls the overall operations of the mobile terminal 100. For example, the controller 180 performs the control and processing associated with voice calls, data communications, and video calls. The controller 180 may include a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input carried out on the touchscreen as characters or images, respectively.

The power supply unit 190 provides power required by various components of the mobile terminal 100. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

An application disclosed in the embodiments of the present invention refers to a program for performing a prescribed function or a prescribed operation using a mobile terminal. The application may be set as a default in the mobile terminal or may be downloaded from a device or an external server. For example, the application can include a weather application, a camera application, a shopping application, a stock application, a schedule management application, or other applications which can perform various functions and operations.

Application information disclosed in the embodiments of the present invention refers to information associated with at least one application loaded in a terminal. The application information can include application identification information, application providing source information such as a URL, application icon information, application content information, information required for application execution, or other information pertaining to an application.

According to the embodiments of the present invention, the mobile terminal 100 may share application information with at least one device, provide a user with the application information of a device, and provide a user with the application information of the mobile terminal 100.

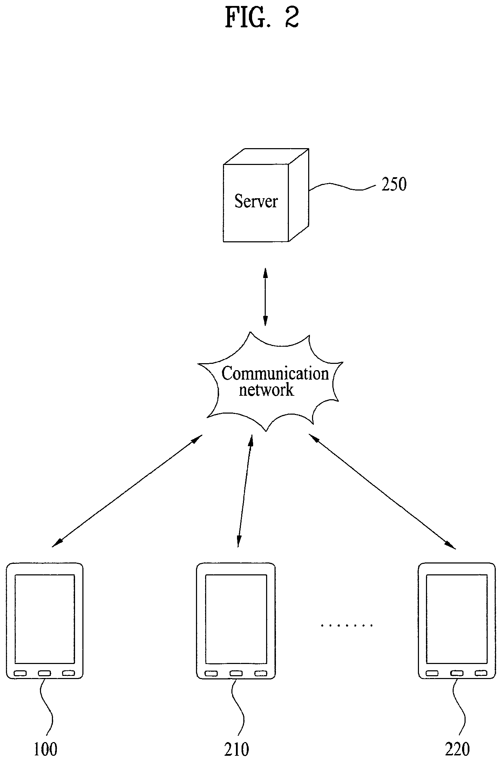

FIG. 2 illustrates a system for sharing application information between a plurality of devices according to an embodiment of the present invention. As illustrated in FIG. 2, a first terminal 100, second terminal 210, and third terminal 220 may be set to share application information with each other. The first through third terminals 100, 210, and 220 may perform a sharing process with or without a server 250.

For clarity, a terminal will sometimes be referred to as a device. Additionally, sharing application settings and sharing application information refers to both the sharing of an application and the settings/information of an application, unless otherwise specified. Likewise, sharing an application refers to both the sharing of an application and the settings/information of an application, unless otherwise specified.

Moreover, application settings can be shared without a separate sharing process. For example, a phonebook can be shared without a separate sharing process between terminals previously registered to mutually perform a communication service, such as an instant messaging service.

The first through third terminals 100, 210, and 220 can be identified via a device identification (ID) or a user ID. For example, a user ID may be associated with a plurality of terminals, alternatively, a device ID may be associated with a plurality of users.

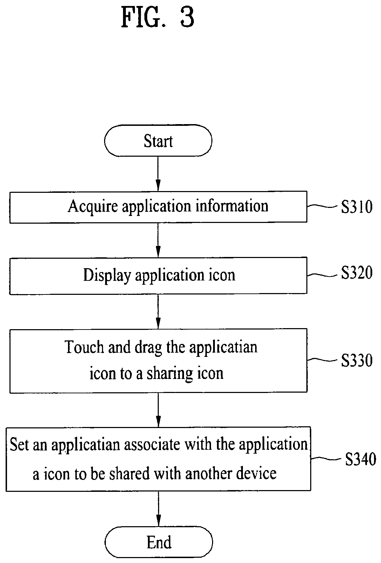

FIG. 3 illustrates a flowchart for a method of sharing an application in a mobile terminal according to an embodiment of the present invention. Referring to FIG. 3, the mobile terminal 100 acquires application information associated with at least one application installed on each of a plurality of devices including the mobile terminal 100 (S310).

The mobile terminal 100 may designate at least one device as a sharing target. Furthermore, the mobile terminal 100 may share the application information of the mobile terminal with the at least one device designated as a sharing target. In response to sharing or acquiring the application information, the mobile terminal 100 displays at least one indicator, sometimes referred to as an application icon (S320). The application icon is associated with at least one shared application. In this example, the application icon indicates the corresponding application and may include at least a representative image, an icon, a name, or other indicator of the corresponding application. Moreover, the application icon may be displayed as a widget.

In the step S320, the mobile terminal 100 configures each sharing device to display an application icon on a page corresponding to the device. For example, the mobile terminal 100 may be associated with four sharing devices and may allocate four pages to the four devices, one page for each device. Additionally, the mobile terminal 100 may display application icons of the four devices on the four pages, respectively. Since the application icon is displayed on the page allocated to the corresponding device, the corresponding device can be identifiably displayed.

After displaying an application icon, the mobile terminal 100 may receive a touch and drag action which drags the application icon to a sharing icon (S330). In this example, the touch and drag action is an example of an input command. An input command is not limited to a touch and drag and other input commands may be performed to share the application icon.

After receiving the touch and drag input action (S330), the mobile terminal 100 sets the application corresponding to the touched and dragged application icon to be shared with another device (S340).

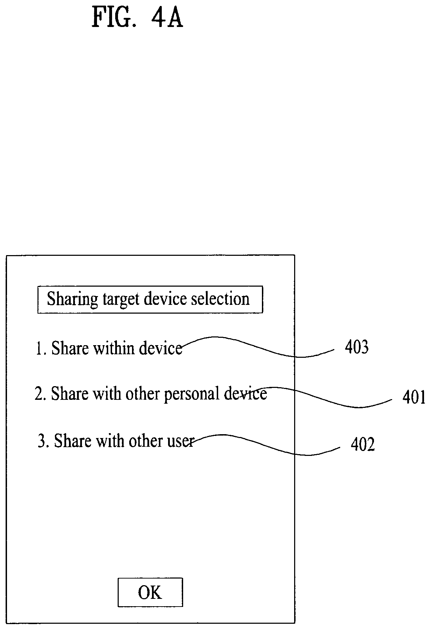

FIG 4A illustrates a configuration for designating a sharing target device according to an embodiment of the present invention. As illustrated in FIG. 4A, the mobile terminal 100 may display a menu for selecting a sharing target device.

For example, the menu may include the options to "share within device" 403, "share with other personal device" 401, and "share with other user" 402. The "share within device" 403 is a menu item for designating the mobile terminal 100 as the sharing target. The "share with other personal device" 401 is a menu item for designating a device associated with the user of the mobile terminal 100 as a sharing target. Finally, the "share with other user" 402 is a menu item for designating devices associated with other users as a sharing target. The sharing target is not required to be within a specific range of the mobile terminal 100, rather, the sharing target must be able to communicate via the mobile terminal 100 via a communication means, such as Wi-Fi or cellular communication.

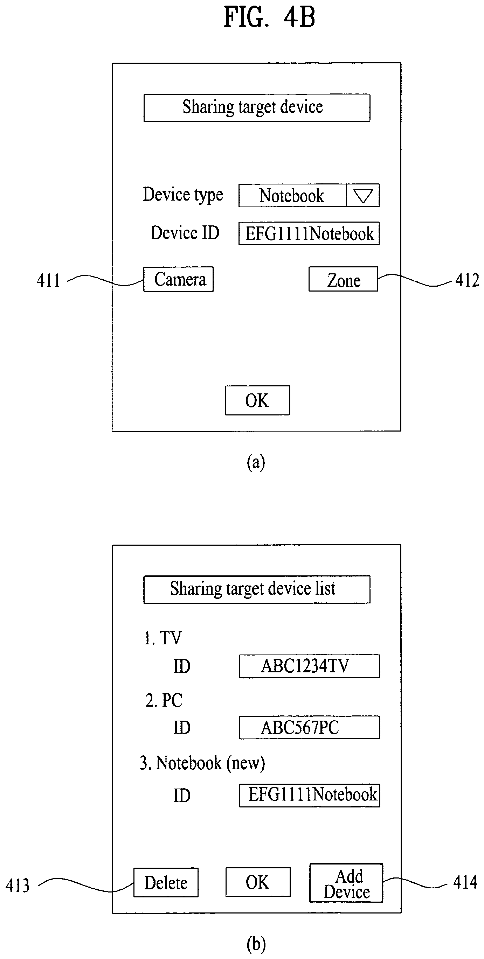

FIG. 4B illustrates an example of a screen when the menu item "share with other personal device" 401 is selected (FIG. 4A). As illustrated in FIG. 4B, the mobile terminal 100 may display a menu for selecting a device for sharing application information. For example, the menu may display device information such as a device type, a device ID, or other identifying information (FIG. 4B(a)).

Additionally, the mobile terminal 100 may activate the camera 121 and select a device when a camera icon 411 is selected. The designated device would be included in an image captured via the camera 121. Furthermore, the mobile terminal 100 may also select a plurality of devices within a predetermined zone of the mobile terminal 100 as sharing devices when a zone icon 412 is selected.

After selecting at least one sharing device, the mobile terminal 100 may display a sharing target device list (FIG. 4B(b)). For example, the sharing devices may include a TV, a PC, and a notebook. Furthermore, the sharing device list may designate newly added devices and provide a unique ID for each device (FIG. 4B(b)).

The mobile terminal 100 may also display a delete icon 413 and an add device icon 414. If a delete icon 413 is selected, the mobile terminal 100 deletes a specific sharing target device from the sharing target device list, such that the mobile terminal 100 no longer shares the application information with the deleted device. If an add device icon 414 is selected, the mobile terminal 100 may initialize a menu for designating at least one more sharing device (FIG. 4B(a)).

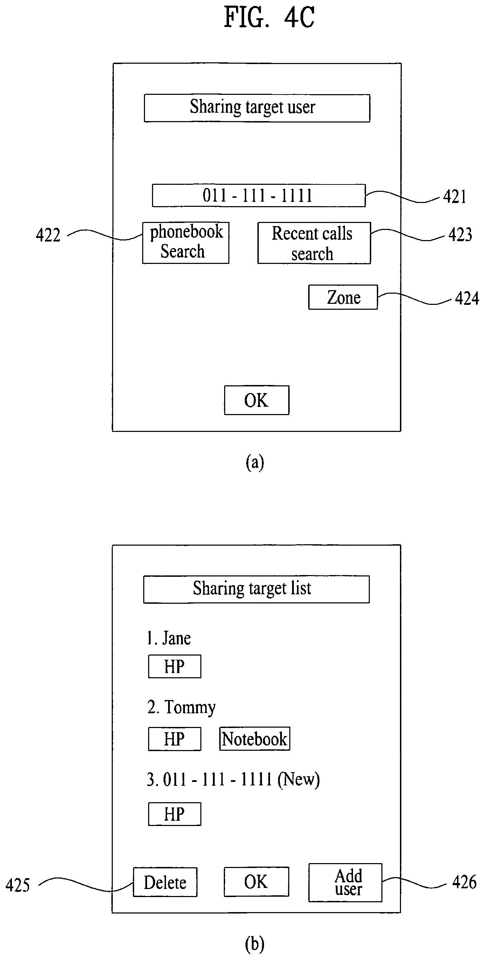

FIG. 4C illustrates an example of screen when the menu item "share with other user" 402 is selected (FIG. 4A). As illustrated in FIG. 4C, the mobile terminal 100 displays a menu 421 for receiving information regarding a user for sharing application information. For example, the information may include a phone number, an ID, a username, or other identifying information (FIG. 4C(a)).

The menu for selecting a user to share application information may include icons such as a phonebook search icon 422, a recent calls search icon 423, and a zone icon 424. If the phonebook search icon 422 is selected, the mobile terminal 100 may select a sharing target from information registered in a phonebook of the mobile terminal 100. If the recent calls search icon 423 is selected, the mobile terminal 100 may select a sharing target via a recent call record. If the zone icon 424 is selected, the mobile terminal 100 may select a user which is in a predetermined range of the mobile terminal 100.

As illustrated in FIG. 4C, the mobile terminal 100 may display a sharing target list (FIG. 4C(b)). For example, the sharing target list may display a phone number, photo, name, ID, or other identifying information, corresponding to a user of the sharing target.

Moreover, the sharing target list may include a delete icon 425 and an add user icon 426. When a delete icon 425 is selected, the mobile terminal 100 deletes a specific sharing target from the sharing target list. Additionally, when an add user icon 426 is selected, the mobile terminal 100 may designate additional sharing targets (FIG. 4C(a)).

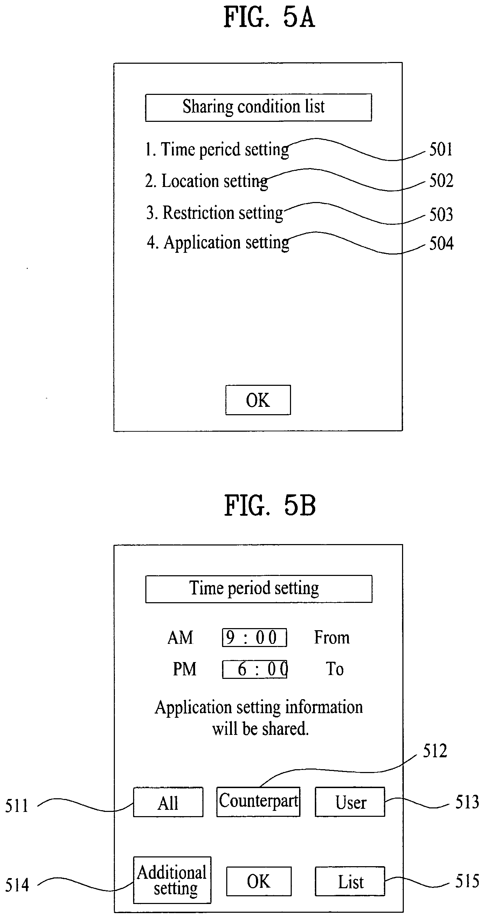

FIG. 5A illustrates an example for setting a sharing condition according to an embodiment of the present invention. Referring to FIG. 5A, the mobile terminal 100 may display a sharing condition list comprising various settings for sharing information between devices. For example, the sharing condition list can include a time period setting 501, a location setting 502, a restriction setting 503, an application setting 504, or other settings.

If the time period setting 501 is selected from the sharing condition list (FIG. 5A), a user may set a time period, sometimes referred to as a sharing time period, for sharing application information (FIG. 5B). For example, the sharing time period of the mobile terminal 100 may be set such that the application information may only be shared between 9AM and 6PM (FIG 5B).

As illustrated in FIG. 5B, the time period setting menu may include various icons, such as an all icon 511, a counterpart icon 512, a user icon 513, an additional setting icon 514, and a list icon 515. When the all icon 511 is selected, the mobile terminal 100 may share the application information of the mobile terminal 100 with all other devices and all other users during the sharing time period. When a counterpart icon 512 is selected, the mobile terminal 100 may only share the application information with devices associated with other users during the sharing time period. Furthermore, when a User icon 513 is selected, the mobile terminal 100 may only share the application information with other devices associated with the user of the mobile terminal 100 during the sharing time period. Sharing refers to both sending application information to a device and receiving application information from a device.

Additionally, when the additional setting icon 514 is selected, the mobile terminal 100 may set additional sharing time periods. Furthermore, when a list icon 515 is selected, the mobile terminal 100 may display a list of the sharing time periods.

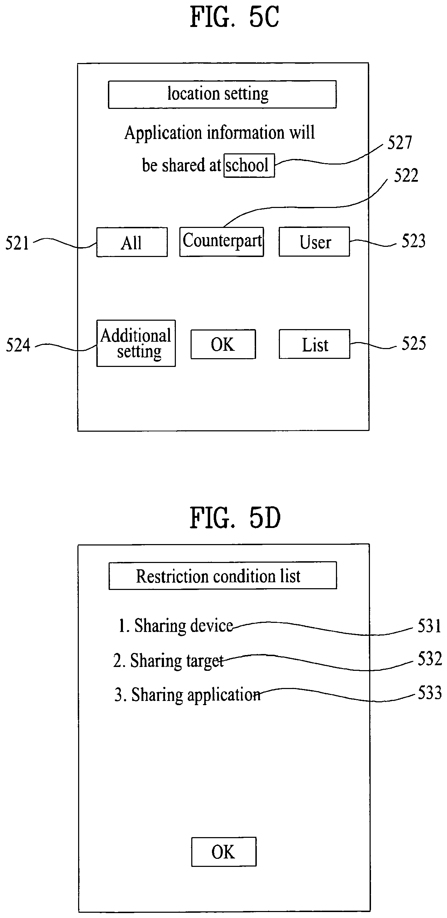

Referring to FIG. 5C, when the location setting 502 is selected from the sharing condition list, the mobile terminal 100 may set a location for sharing application information. The location will sometimes be referred to as a sharing location. For example, if the sharing location is set to "school", the mobile terminal 100 or the sharing target may share the application information when the respective device is located at the "school" location. Furthermore, the mobile terminal 100 may terminate the sharing of the application information when either the mobile terminal 100 or the sharing target are no longer at the sharing location. The location may be determined via a position-location module 115 or other location acquisition devices. The mobile terminal 100 may input the sharing location via an address input, an address search, a previously visited location, a point of interest (POI), or other address input means.

As illustrated in FIG. 5C, the location setting menu may include a location input area 527 to designate the sharing location, an all icon 521, a counterpart icon 522, a user icon 523, and additional setting icon 524, and a list icon 525. When an all icon 521 is selected, if both of the mobile terminal 100 and the sharing target are located at the sharing location, the mobile terminal 100 may share the application information. When a counterpart icon 522 is selected, if the sharing target is located at the sharing location, the mobile terminal 100 may share the application information. When a user icon 523 is selected, if the mobile terminal 100 is located at the sharing location, the mobile terminal 10 may share the application information.

Moreover, when an additional Setting icon 524 is selected, the mobile terminal 100 may designate additional sharing locations. Furthermore, when a list icon 525 is selected, the mobile terminal 100 may display a list of sharing locations. Additionally, the mobile terminal 100 may designate a sharing location per sharing target (not shown).

When the restriction setting 503 is selected from the sharing condition list (FIG. 5A), the mobile terminal 100 may display a restriction condition list including a restriction condition on a sharing device 531, such as the mobile terminal 100, a sharing target 532, or a sharing application 533 (FIG. 5D).

Specifically, if a sharing device 531 is selected from the restriction condition list, the mobile terminal 100 may designate a device to which the application information of the mobile terminal 100 shall not be provided. Alternatively, if a sharing target 532 is selected, the mobile terminal 100 may designate a sharing target which may not share, or provide, application information to the mobile terminal 100. Alternatively, if a sharing application restriction 531 is selected from the restriction condition list, the mobile terminal 100 may designate a specific application which shall not be shared.

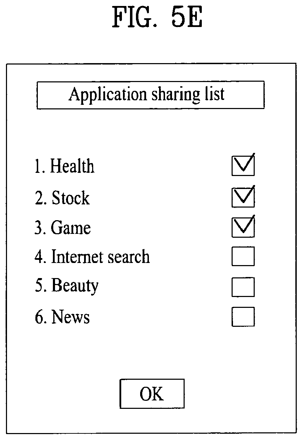

FIG. 5E illustrates a list which may be displayed when the application setting 504 is selected from the sharing condition list (FIG. 5A), the list may sometimes be referred to as an application sharing list. The Application sharing list may comprise a list of various applications of the mobile terminal 100. For example, the Application Sharing List may include applications such as health, stock, game, internet search, beauty, news, and other applications.

The mobile terminal 100 may share application information of an application selected from the application sharing list. Accordingly, the mobile terminal 100 may also acquire application information of an application selected from the application sharing list.

The mobile terminal 100 may acquire application information when the mobile terminal 100 receives an input for acquiring application information via the user input unit 130. The input may be received via any input means provided by the mobile terminal 100. For example, the mobile terminal 100 may display a key zone for receiving an input for acquiring application information on a standby screen or a display screen of an application. The mobile terminal 100 may acquire application information in response to an input on the displayed key zone.

According to an embodiment, the mobile terminal 100 may include a camera 121 configured to capture an image. Additionally, the mobile terminal 100 may display a unique identifier for each device in the image captured by the camera 121. For example, the unique identifier may be displayed at a location corresponding to a device location. The identified device may be a sharing target.

The mobile terminal 100 may acquire application information from each device located within a predetermined distance of the direction of the camera 121 (S310, FIG. 3). Furthermore, the mobile terminal 100 may acquire application information from the device corresponding to the identifier selected by the user.

The predetermined distance may be set by the user, generated by the controller 180, or set during manufacturing. The distance of the device may be acquired using the position location module 115, the short range communication module 114, or other distance measuring units.

The mobile terminal 100 may display an identifier for a device located within a predetermined distance. The device identified by the displayed identifier may include a device provided with application information associated with the mobile terminal 100 or designated as sharing target.

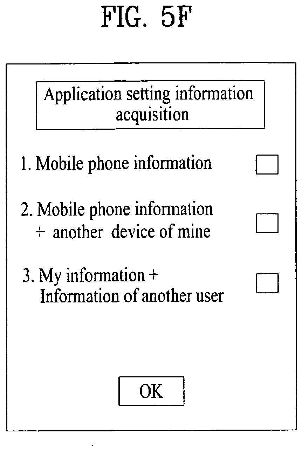

FIGs. 5F to 5H illustrate examples of screen configurations for receiving an input for an acquisition command signal according to the present invention.

The mobile terminal 100 may display a screen for selecting a target device (FIG. 5F). For example, as illustrated in FIG. 5F, the mobile terminal 100 may acquire application information of the mobile terminal 100 when the "mobile phone information" is selected. Additionally, the mobile terminal 100 may acquire application information of the mobile terminal 100 and application information of at least another device associated with the user of the mobile terminal when "mobile phone information + another device of mine" is selected. Finally, the mobile terminal 100 may acquire application information of the mobile terminal 100 and application information of a mobile terminal which is not associated with the user of the mobile terminal 100 when If "my information + information of another user" is selected. The embodiments described above are not limited to the three options illustrated in FIG. 5F. For example, all devices within a predetermined range of the mobile terminal 100 may be selected as a target device regardless of whether the device is associated with the user of the mobile terminal 100.

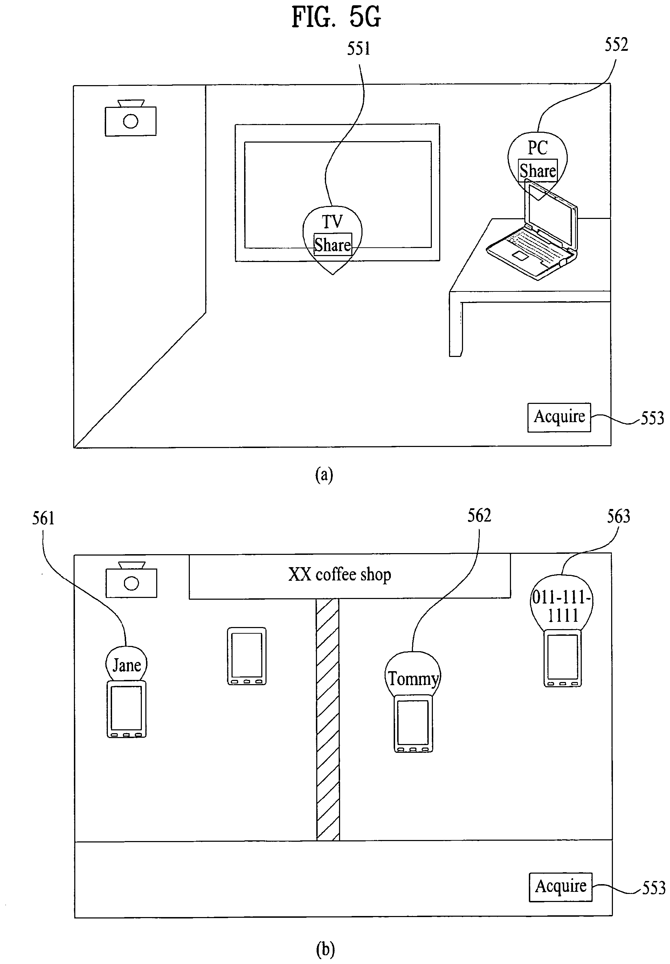

Referring to FIG. 5G, the mobile terminal 100 may display a first identifier 551 corresponding to a first device and a second identifier 552 corresponding to a second device within the image acquired via the camera 121 (FIG. 5G(a)). Alternatively, the mobile terminal 100 may display third to fifth identifiers 561 to 563 respectively corresponding to third to fifth devices within the image acquired via the camera 121 (FIG. 5G(b)).

In this example, the first and second devices are within the predetermined range from the mobile terminal 100 and are associated with the user of the mobile terminal 100. Furthermore, the third to fifth devices are within the predetermined rage of the mobile terminal and are not associated with the user of the mobile terminal 100.

The identifier may comprise of an image, a name, a unique number, or any other identifier for the corresponding device. For example, the identifier may be a name or image registered in a phonebook for a user of the corresponding device.

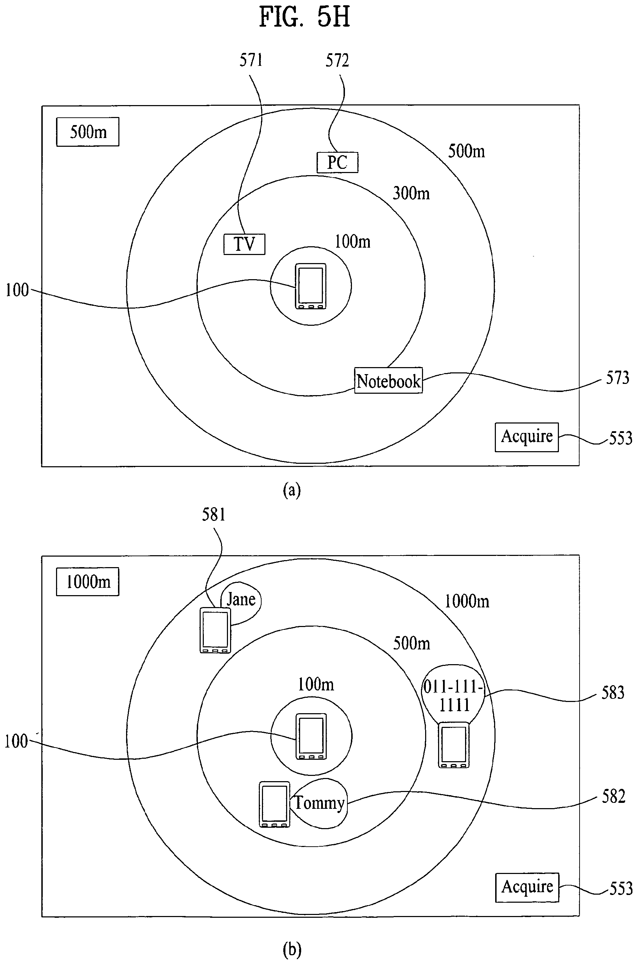

Referring to FIG. 5H, the mobile terminal 100 may display identifiers 571 to 573 respectively corresponding to devices located within a predetermined distance from the mobile terminal 100 (FIG. 5H(a)). Alternatively, the mobile terminal 100 may display identifiers 581 to 583 respectively corresponding to devices located within a predetermined distance from the mobile terminal 100 (FIG. 5H(b)).

Furthermore, an on/off state of a device can be displayed on the corresponding identifier. Moreover, if a user selects the acquire icon 553, the mobile terminal 100 may only acquire the application information of the devices corresponding to an identifier selected by the user.

According to another embodiment, the mobile terminal 100 further include a memory 160 configured to store the application information acquired from the devices. For example, when receiving an input to acquire the application information from the user, the mobile terminal 100 may search the stored application information for application information that matches identification information of the selected devices.

Furthermore, when the mobile terminal 100 receives an input to request application information of a device or when the application information of a device is updated, the mobile terminal 100 may receive the application information of the corresponding device. Alternatively, the mobile terminal 100 may have a pre-set reception period for receiving the application information according to a pre-set schedule.

For clarity and convenience of the following description, a page displaying an application icon will sometimes be referred to as a home screen. Furthermore, for example purposes, a plurality of devices may include the mobile terminal 100, a TV, a PC, and a notebook. Additionally, application icons will sometimes be referred to as icons for sharing devices.

Although not illustrated, according to an embodiment, in addition to sharing application information, the mobile terminal 100 may share the contents of the home screen with other devices. Additionally, other devices may share the contents of their respective home screens with the mobile terminal 100.

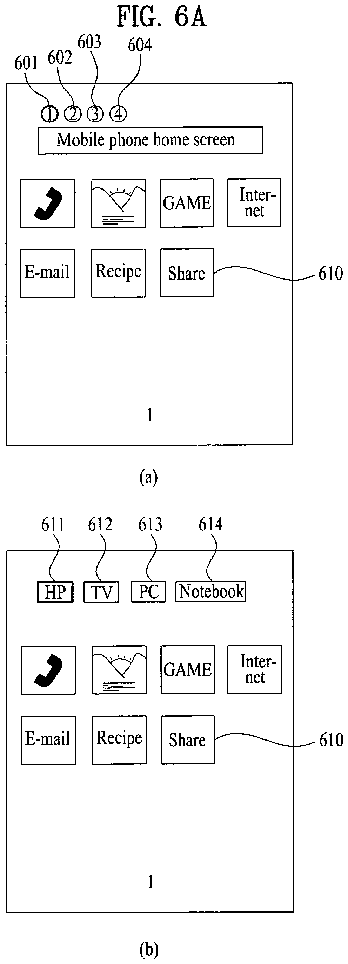

FIGs. 6A to 6D illustrate examples of screen configurations for displaying application icons corresponding to a plurality of sharing devices.

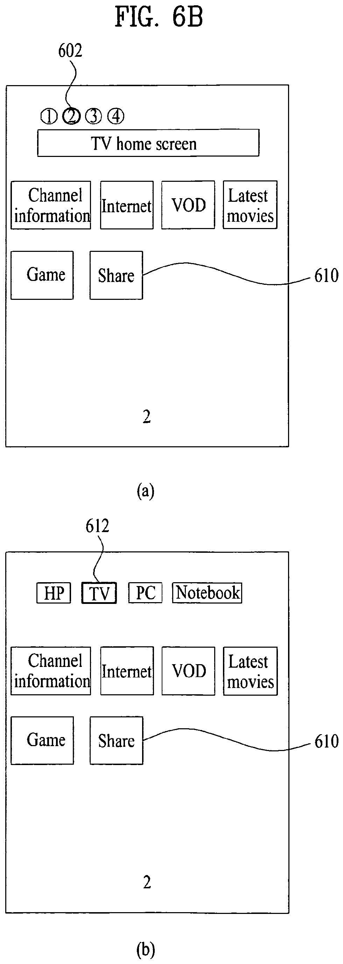

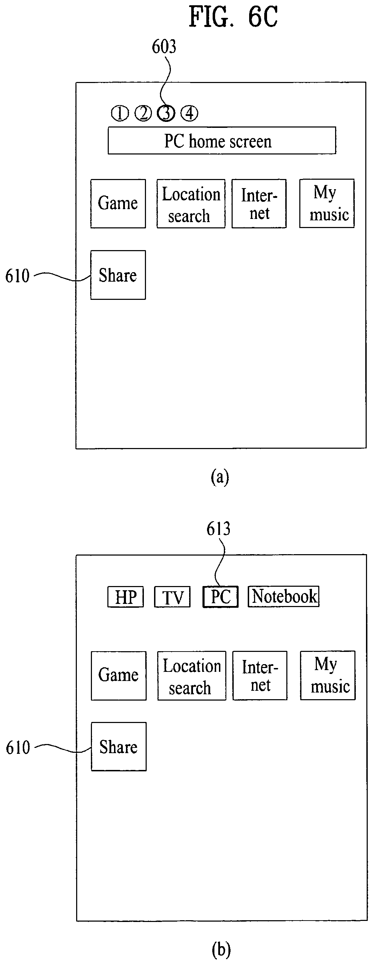

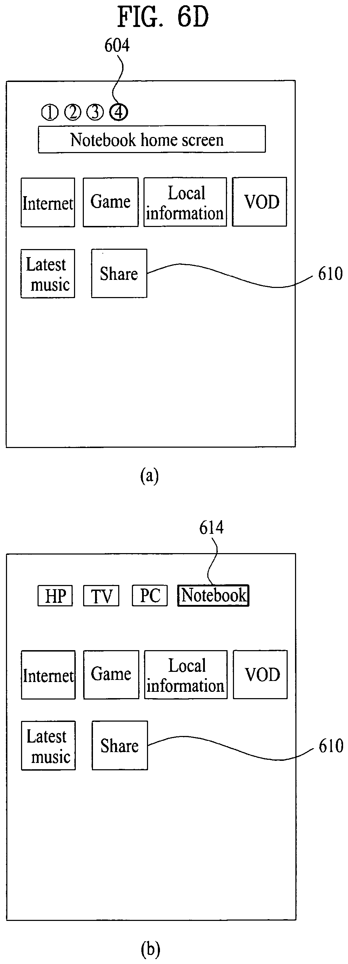

According to an embodiment, the mobile terminal 100 displays a mobile phone home screen including application icons (FIG. 6A). The mobile terminal 100 may also display various screens associated with each device which has shared application information. For example, the mobile terminal 100 may display a screen associated with a TV (FIG. 6B), a screen associated with a PC (FIG. 6C), and a screen associated with a notebook (FIG. 6D).

Referring to FIGs. 6A to 6D, the mobile terminal 100 may displays page identifiers 601 to 604 or device identifiers 611 to 614 associated with the various screens or may display device identifiers 611 to 614 associated with the various screens. As illustrated in FIGs. 6A to 6D the respective page identifier or device identifier associated with a screen is distinguished when the mobile terminal 100 is displaying a screen associated with a specific device. For example, as illustrated in FIG. 6B(a), the page identifier 602 is distinguished when the mobile terminal is displaying the second screen which is associated with the TV. Furthermore, as illustrated in FIG. 6B(b), the device identifier 612 is distinguished when the mobile terminal is displaying the second screen which is associated with the TV.

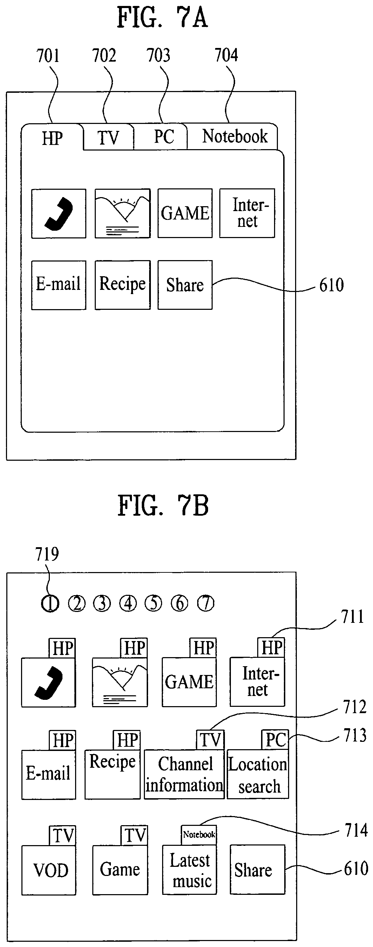

FIG. 7A and FIG. 7B illustrate examples of screen configurations for identifiably displaying application icons corresponding to a plurality of sharing devices using tags or identifiers, respectively, according to the present invention.

Referring to FIG. 7A, the mobile terminal 100 may display tags associated with each device which has shared application information with the mobile terminal. For example, as illustrated in FIG. 7A, the mobile terminal 100 may display a mobile phone tag 701, a TV tag 702, a PC tag 703, and a Notebook tag 704. When a specific tag is selected, the mobile terminal 100 may display application icons associated with the device.

Referring to FIG. 7B, the mobile terminal 100 may display the application icons from the various devices. If all of the application icons do not fit on one screen, the mobile terminal may display the icons on a plurality of pages, wherein each page is identified by a page identifier. For example, as illustrated in FIG. 7B, the first page is identified by a first page identifier 719. Furthermore, the mobile terminal 100 may display identification information for the device associated with the displayed application icon. For example, as illustrated in FIG. 7B the mobile terminal 100 may display a mobile terminal identifier 711 for applications associated with the mobile terminal, a TV identifier 712 for applications associated with the TV, a PC identifier 713 for applications associated with the PC, and a Notebook identifier 714 for applications associated with the Notebook.

With regard to FIGs. 7A and 7B the mobile terminal may share application information associated with a selected icon in response to selecting the share icon 610.

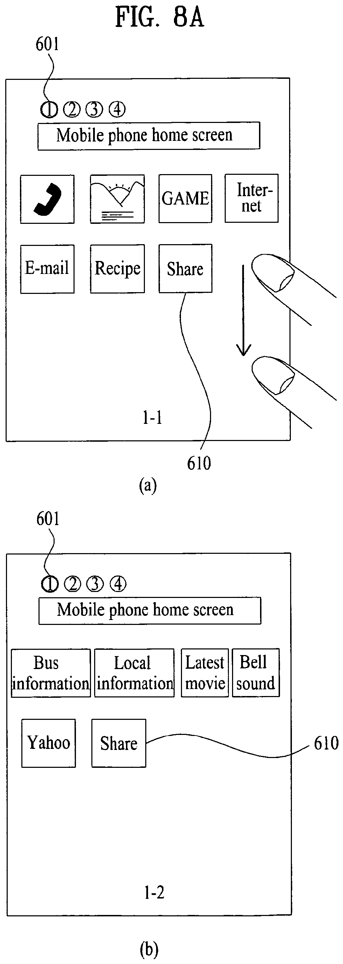

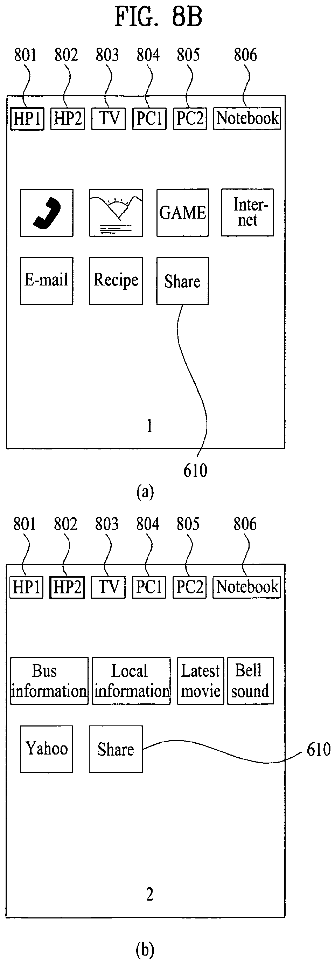

When configuring the display of the application icons (FIG. 3, S320), the mobile terminal 100 may allocate a plurality of pages for displaying the icons of shared applications. FIG. 8A and FIG. 8B illustrate examples of screen configurations for allocating a plurality of pages for displaying an icon for a shared application.

According to an embodiment, while an icon for a shared application is displayed on a screen associated with a device (FIG. 8A(a)), the mobile terminal 100 may display a second screen of icons in response to a user input, such as a touch and drag (FIG. 8A(b)). The example illustrated in FIG. 8A is not limited to two screens, the number of screens may be determined according to the number of icons for the shared applications.

Moreover, the mobile terminal 100 may display a screen associated with a different device, such as a notebook in response to receiving an input in a left-to-right direction. The input is not limited to a touch and drag input and may be any input for changing the display of a screen in a vertical or horizontal direction.

Referring to FIG. 8B, the mobile terminal 100 may display a plurality of device identifiers 801 to 806 and may allocate a page per device identifier. For example, a first terminal identifier 801 and a second terminal identifier 802 may be associated with the mobile terminal 100. Accordingly, a first page and a second page are respectively associated with the first terminal identifier 801 and the second terminal identifier 802. Moreover, each terminal identifier may be distinguished when the respective page is displayed. As illustrated in FIGs. 8B(a) and 8B(b), the screens for displaying the icons for shared applications are displayed on the different pages. In the accompanying figures a mobile terminal will sometimes be referred to as a HP.

In the following examples, for clarity, the mobile terminal 100 will sometimes be referred to as "user" and other devices will sometimes be referred to as "Jane," "Tommy," and "011-111-1111," respectively. Additionally, in the following examples, the other devices are devices which are associated with a user which is different than the user of the mobile terminal 100. However, according to other embodiments, the other devices may be associated with the user of the mobile terminal 100. Moreover, the mobile terminal 100 may be considered another device, such that the mobile terminal 100 may share application information with other applications of the mobile terminal 100.

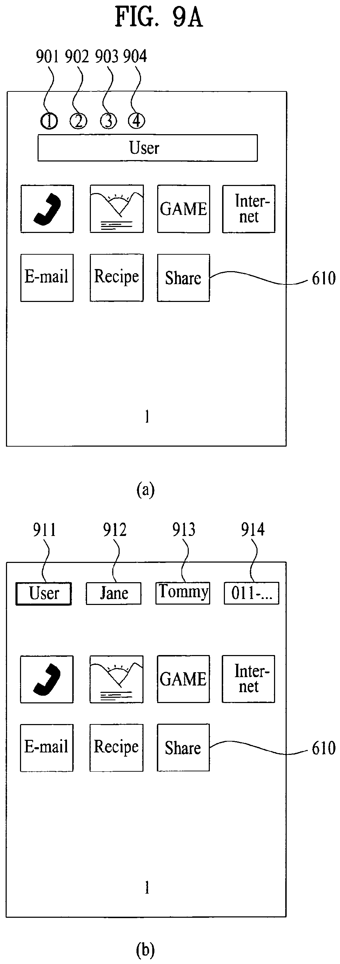

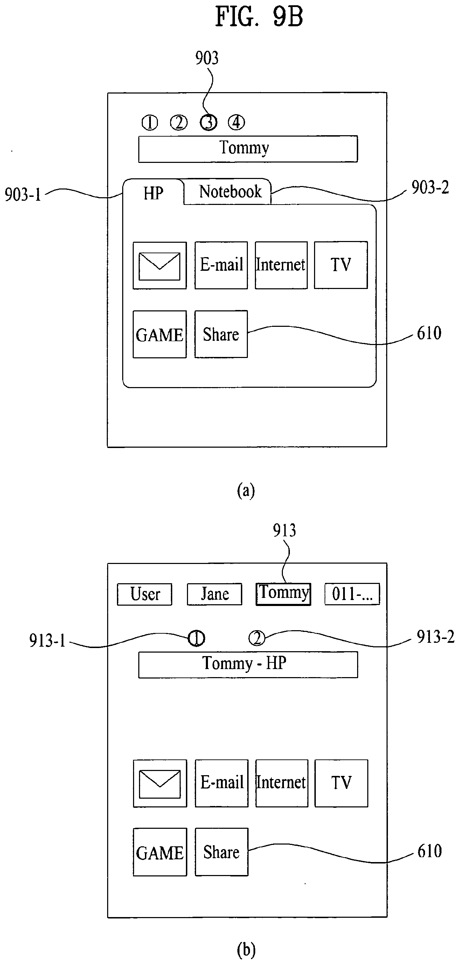

FIG. 9A and FIG. 9B illustrate examples for displaying an application icon corresponding to a sharing user. Referring to FIG. 9A, the mobile terminal 100 may display a home screen including application icons of the mobile terminal 100 on a first page. The mobile terminal 100 may display page identifiers 901-904 for each respective page (FIG. 9A(a)). Alternatively, the mobile terminal 100 may display user identifiers 911-914 for each respective user (FIG. 9A(b)).

An identifier for a displayed page may be distinguished from the other identifiers when the mobile terminal is displaying the page associated with the identifier. The various pages allow for a user to determine the applications available on each of the devices.

The mobile terminal 100 may display an application icon for the device associated with a specific user, such as "Tommy" (FIG. 9B). The mobile terminal 100 may display application icons of each of a plurality of the devices when a plurality of devices are associated with a specific user. Additionally, the mobile terminal 100 may provide identifiers for each device associated with a user.

For example, as illustrated in FIG. 9B, a mobile phone tag 903-1 is identifiably displayed when the page for the shared applications from Tommy's mobile phone are displayed (FIG. 9B(a)), alternatively, a page identifier 913-1 may also be identifiably displayed (FIG. 9B(b)). Moreover, a notebook tag 903-2 or a reference number 913-2 may be displayed when the shared applications from Tommy's notebook are displayed. The embodiment is not limited to the example of a user only having a notebook and a mobile phone, accordingly tags and reference values may be displayed for each device associated with a user.

According to another embodiment, when a specific identifier is selected from at least one identifier displayed within an image captured via the camera 121 (FIG. 3 S320), the mobile terminal 100 may display application icons for the device corresponding to the selected identifier. A user may select a plurality of identifiers from the image captured via the camera 121. A position of each identifier may change in response to movement of the camera.

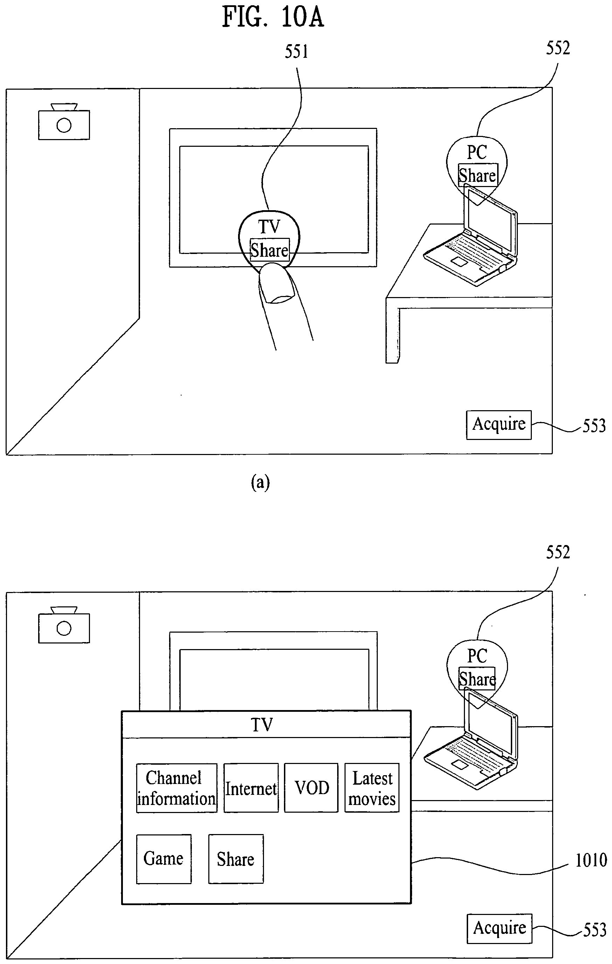

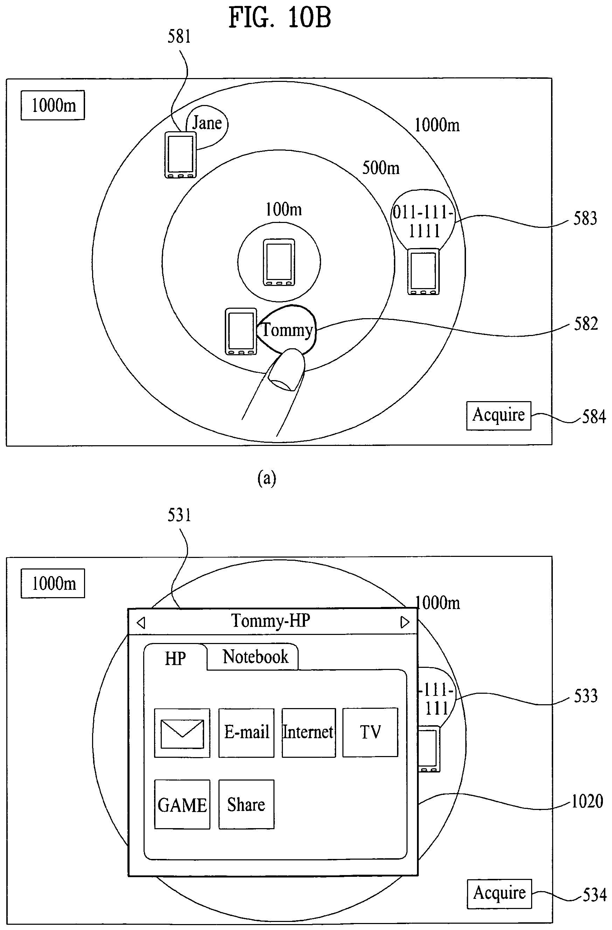

FIG. 10A and FIG. 10B illustrate examples of displaying an application icon when a device or user is selected. Referring to FIG. 10A, when receiving an input to select a TV identifier 551 (FIG. 10A(a)), the mobile terminal 100 may display a window 1010 including application icons for the TV (FIG. 10A(b)).

Additionally, when a user identifier 582 is selected (FIG. 10B(a)), the mobile terminal 100 may display a window 1020 including application icons for the devices associated a user of the selected user identifier 582 (FIG. 10B(b)).

According to an embodiment, the mobile terminal 100 may display a sharing icon corresponding to an application which is common between at least two devices (FIG. 3, S320). The sharing icon 610 may be displayed regardless of whether an application icon included in a currently displayed page corresponds to a terminal or a user. In this example, a display position of the sharing icon may be identical on each page or can be set different per page. The presence of the sharing icon 610, a display position of the sharing icon 610, or the number of sharing icons can be determined in accordance with a user selection. Additionally, the sharing icon 610 may be displayed upon installing a new application, or in response to a user input.

According to another embodiment of the present invention, the mobile terminal 100 may initialize the sharing of application information during a start-up or boot process of the mobile terminal. Specifically, when fully booted, a user may select for application information to be shared during start-up such that the user does not have to manually share the application information each time the mobile terminal 100 is turned on. Additionally, the initialization of sharing during boot up may be applied to other devices as well, such that the application information of a device may automatically be shared with the mobile terminal as soon as a device is turned on.

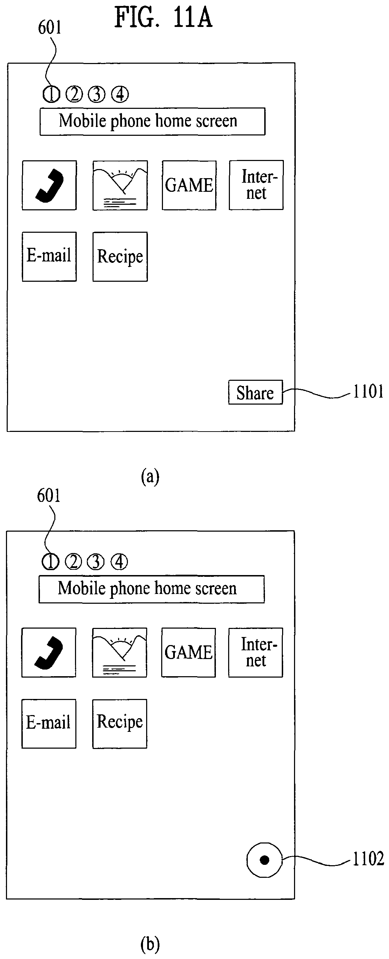

FIGs. 11A to 11C illustrate examples of screens for displaying a sharing icon according to the present invention.

The mobile terminal 100 may display a sharing icon 1101 on a prescribed region as an icon (FIG. 11A(a)) or may display a sharing icon 1102 on a prescribed region of the screen according to a point display scheme (FIG. 11A(b)).

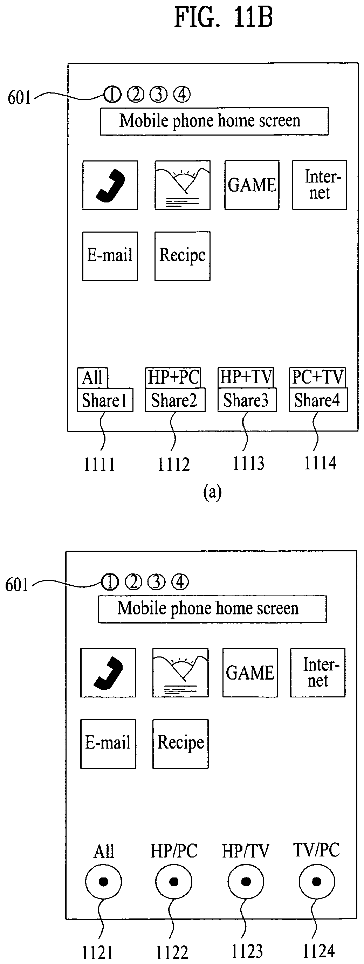

Referring to FIG. 11B, the mobile terminal 100 may display a plurality of sharing icons. Specifically, a first sharing icon 1111/1121 corresponds to an application shared with all terminals and a second sharing icon 1112/1122 may correspond to an application shared with a mobile phone and a PC. Furthermore, a third sharing icon 1113/1123 may correspond to an application shared with the mobile phone and a TV, and a fourth sharing icon 1114/1124 may correspond to an application shared with the TV and the PC.

When a currently displayed page is a mobile phone home screen, the mobile terminal 100 may display the first to third sharing icons 1111 to 1113 or 1121 to 1123 corresponding to the applications shared with the mobile terminal 100 only. When a currently displayed page is a TV home screen, the mobile terminal 100 may display the third and fourth sharing icons 1113 and 1114 or 1123 and 1124 corresponding to the applications shared with the TV only.

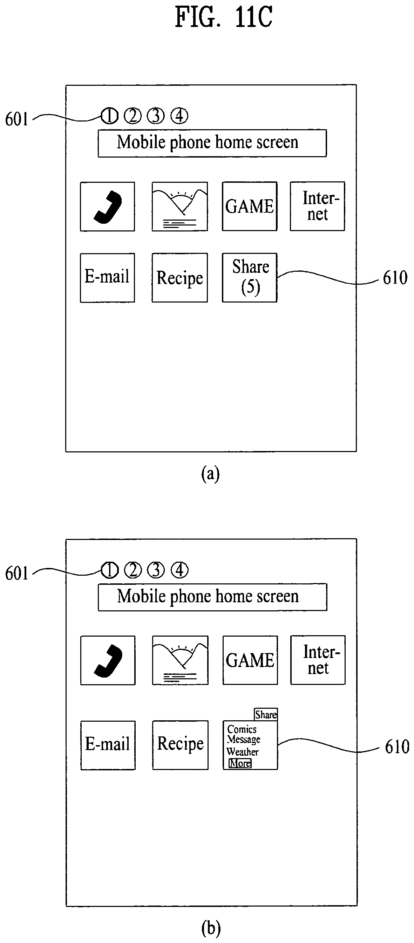

Referring to FIG. 11C, the mobile terminal 100 may display information associated with the sharing icon. For example, the mobile terminal 100 may display information such as the number of applications corresponding to the sharing icon 610 (FIG. 11C(a)), a name of the application associated with the sharing icon 610 (FIG. 11C(b)), or other information pertaining to the shared applications.

According to another embodiment, when a sharing icon is selected (FIG. 3, S320), the mobile terminal 100 may display an indicator of an application corresponding to the sharing icon. In this example, the application corresponding to the sharing icon refers to an application which is common between at least two devices.

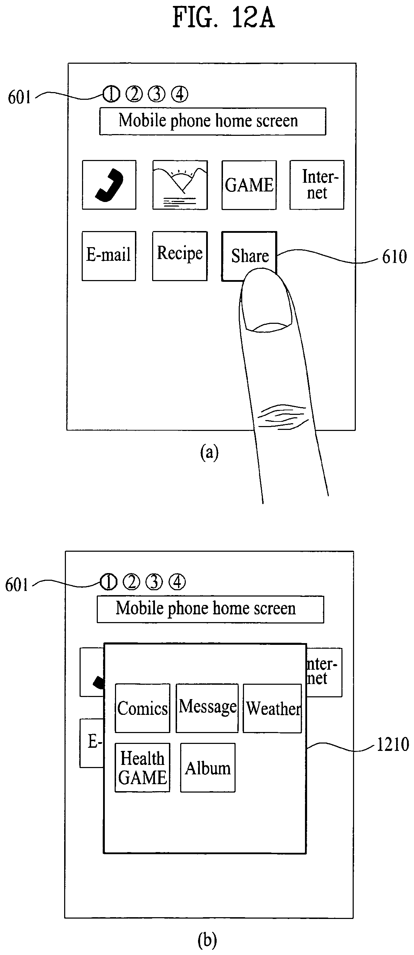

FIGs. 12A to 12C illustrate examples of screen configurations for displaying a shared application icon corresponding to a sharing icon. When a sharing icon 610 is selected (FIG. 12A(a)), the mobile terminal 100 may display a window 1210 for displaying application icons corresponding to the sharing icon 610 (FIG. 12A(b)).

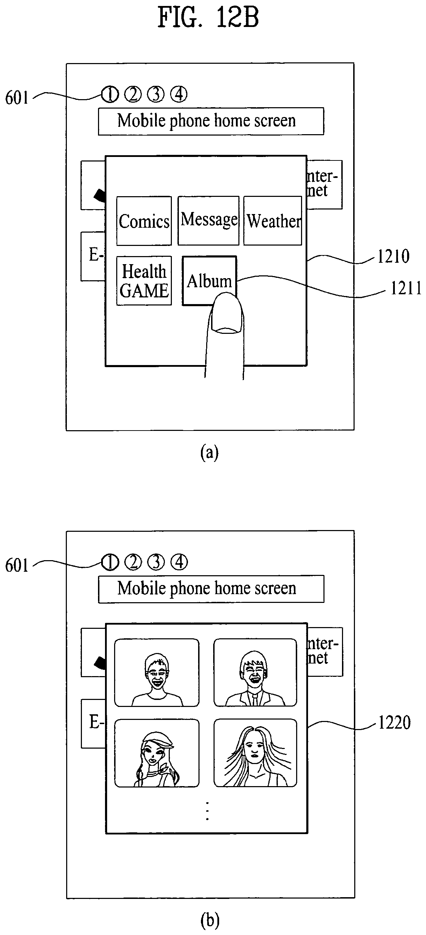

Referring to FIG. 12B, when an icon 1211 of an application corresponding to the sharing icon 610 is selected (FIG. 12B(a)), the mobile terminal 100 may execute the application and displays an execution screen 1220 of the application (FIG. 12B(b)). For example, if the selected application is a photo album, photos stored in the mobile terminal 100 can be displayed on the execution screen 1220.

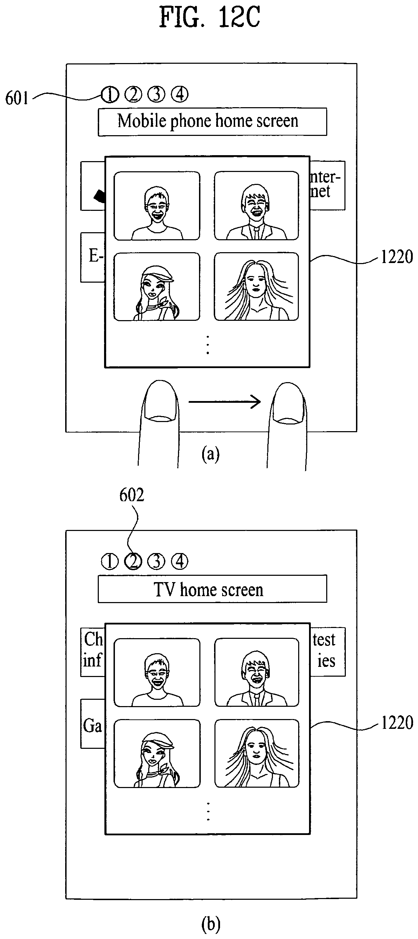

Referring to FIG. 12C, while the execution screen 1220 is displayed on the mobile phone home screen, a page turning input (FIG. 12C(a)) may cause the mobile terminal 100 to switch the mobile phone home screen to the TV home screen. The execution screen 1220 may continue to run and be displayed on the new screen (TV home screen). For example, the page turning input can include a touch and drag action in a right or left direction.

The number of the turned pages can be determined in accordance to a touch and drag speed or a touch and drag distance. Hence, a currently displayed home screen can be switched to another home screen not located adjacent to the currently displayed home screen if the touch and drag speed is greater than a predetermined speed or a threshold.

Alternatively, the page turning action can be input via a touch to a corresponding key zone, a detection of a motion, a touch to a corresponding page icon, a touch to a corresponding device icon, or any other input means.

Moreover, the mobile terminal 100 may cancel the sharing of application settings or an application under the control of the controller 180. The shared application may be only set on a specific terminal and a corresponding indicator can be displayed on a page corresponding to the specific terminal.

In sharing or cancelling the sharing of an application, the mobile terminal 100 transmits a sharing request signal or a sharing cancellation request signal for the specific application to each device. Having received the request signal, each device may perform the sharing or sharing cancellation for the specific application. Alternatively, the mobile terminal 100 may access each device and may directly control the sharing or the sharing cancellation of the specific application. Alternatively, the mobile terminal 100 transmits a sharing request signal or a sharing cancellation request signal for the specific application to a server for managing applications. Having received the request signal, the server may perform the sharing or the sharing cancellation of the specific application on each of the devices.

Furthermore, according to another embodiment, the mobile terminal may initiate the sharing of an application during the start-up process, such that the mobile terminal is paired with another device once the mobile terminal is activated. Specifically, the mobile terminal may share information with another device, and vice-versa, upon initialization of the mobile terminal.

In the following description, the common sharing and the common sharing cancellation of the specific application are described in detail with reference to the accompanying drawings. As mentioned in the foregoing description, the devices share application information with each other and the mobile terminal 100. Additionally, users of the devices can be identical to or different from the user of the mobile terminal 100.

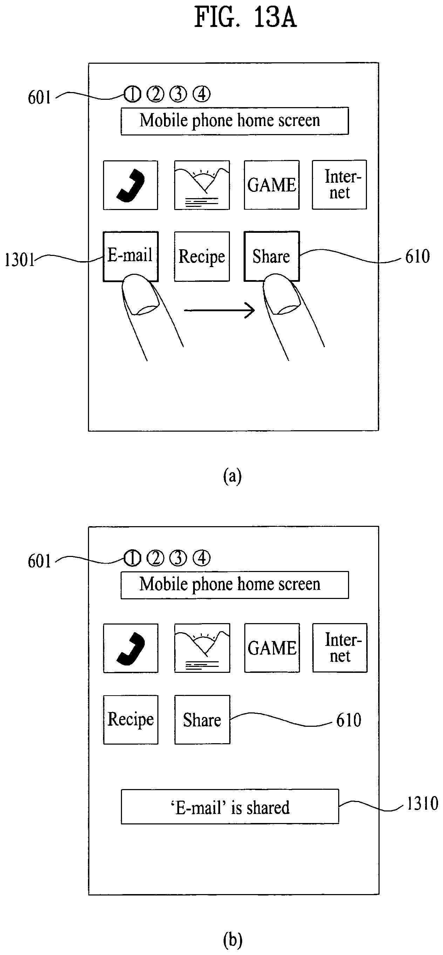

FIGs. 13A to 13C illustrate examples of screen configurations for sharing an application corresponding to an application icon.

Referring to FIG. 13A, when touching and dragging a first application icon 1301 to a sharing icon 601 (FIG. 13A(a)), the mobile terminal 100 may share an E-mail application, which corresponds to the first application icon 1301, with a plurality of devices (FIG. 13A(b)). In this example, a common sharing notification window 1310 may be displayed.

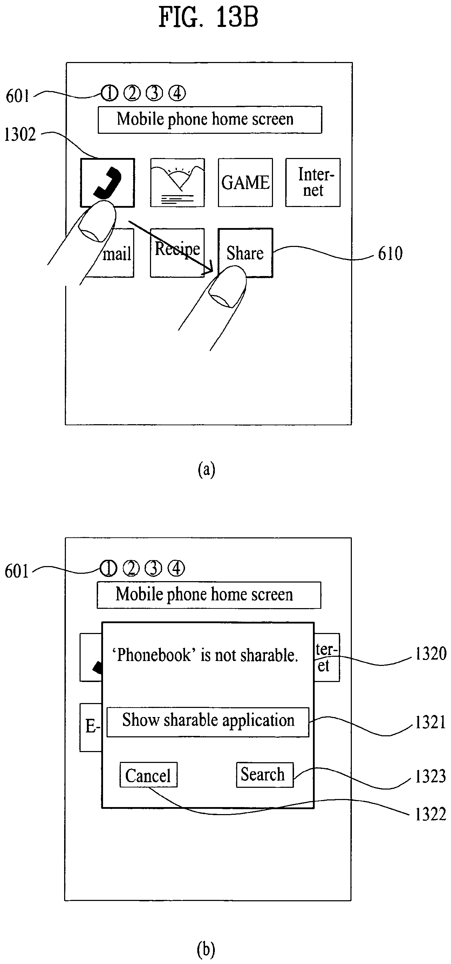

Referring to FIG. 13B, the mobile terminal 100 receives a touch and drag input from a second application icon 1302 to a sharing icon 610 (FIG. 13B(a)). If an application corresponding to the second application icon cannot be shared, the mobile terminal 100 may output a notification 1320 indicating that sharing is not possible. For example, if the phonebook is the application which cannot be executed in a specific device such as a TV, the phonebook may be referred to as an application which cannot be shared.

Moreover the mobile terminal 100 may identifiably display an icon indicating that an application may be shared in response to a selection of a show sharable application icon 1321 from a notification 1320 which indicated that sharing is not possible. Alternatively, if a cancel icon 1322 is selected, the mobile terminal 100 may return to the mobile phone home screen display state. If a search icon 1323 is selected, the mobile terminal 100 may enter a sharable application search mode.

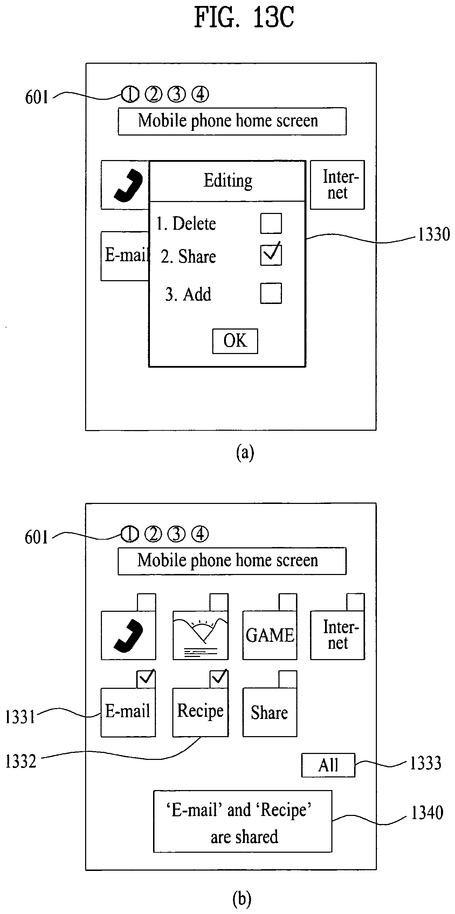

Referring to FIG. 13C, if a menu item corresponding to application editing is selected, the mobile terminal 100 displays an editing list to edit the sharing capability of an application (FIG. 13C(a)). If the share item is selected, a user may select at least one application icon for sharing. For example, if application icons for E-Mail 1331 and recipe 1332 are selected, the mobile terminal 100 sets the E-mail and recipe applications, which respectively correspond to the selected application icons, as sharable and outputs a sharing notification 1340. Moreover, if an all icon 1333 is selected, all the application icons included in the mobile phone home screen can be shared.

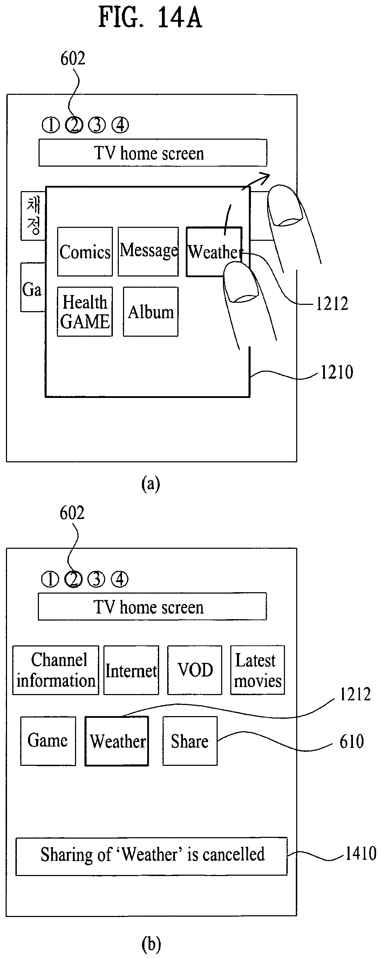

FIGs. 14A to 14C illustrate examples of screen configurations for canceling the sharing of an application.

Referring to FIG. 14A, the mobile terminal 100 may receive a touch and drag input on an application icon 1212 to a prescribed point on the screen (FIG. 14A(a)). In this example, the touch and drag action is just one example of an input, the sharing cancellation action may be selected via various inputs.

The mobile terminal 100 cancels the sharing of the selected application and maintains the application on the device corresponding to a currently displayed home screen. In this example, a notification 1410 indicating the cancellation for the sharing of the specific application may be displayed on the devices.

Furthermore, when receiving a touch and drag input from a specific application icon to a specific page icon, the mobile terminal 100 may cancel the sharing of the specific application and maintains the sharing of the application on the device corresponding to the specific page icon (not shown).

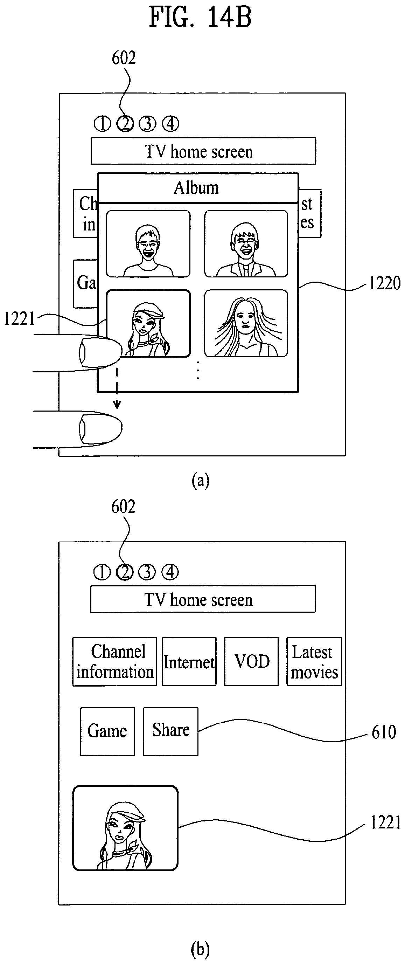

Referring to FIG. 14B, a specific photo 1221 from a shared application may be selected and dragged to a prescribed point of the screen (FIG. 14B(a)). The mobile terminal 100 may display the specific photo 1221 on a prescribed region of a currently displayed device home screen. Alternatively, the mobile terminal 100 may set the specific photo 1221 to a background image of the device home screen.

As illustrated in FIG. 14A and FIG. 14B, the displayed position of the specific application icon 1212 or the specific photo 1221 on the device home screen is a point which the touch and drag input was terminated or a random point determined by the controller 180.

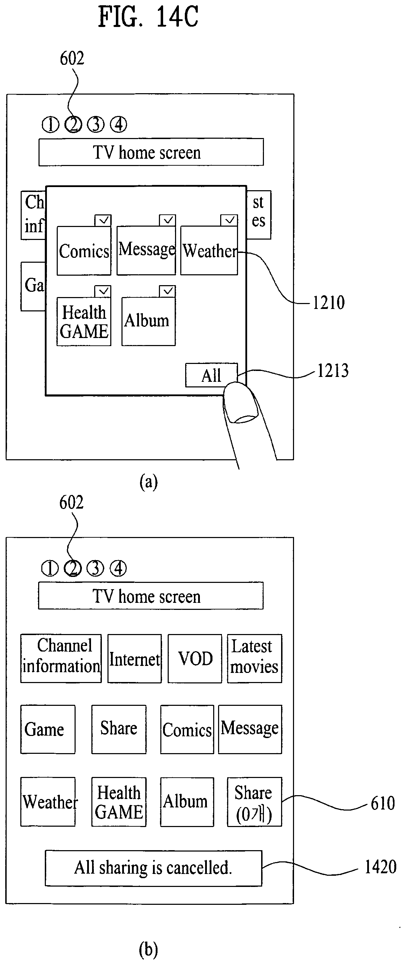

Referring to FIG. 14C, if an all icon 1213 is selected (FIG. 14C(a)), the mobile terminal 100 may cancel the sharing of all shared applications (FIG. 14C(b)). In cancelling the sharing, a notification 1420 which indicates that the sharing has been cancelled for all shared applications may be displayed.

According to this figure, when downloading an application from a server 250 via the wireless communication unit 110, the mobile terminal 100 may designate at least one device as a target for the storage location of the downloaded application. The downloaded application can be shared amongst various devices.

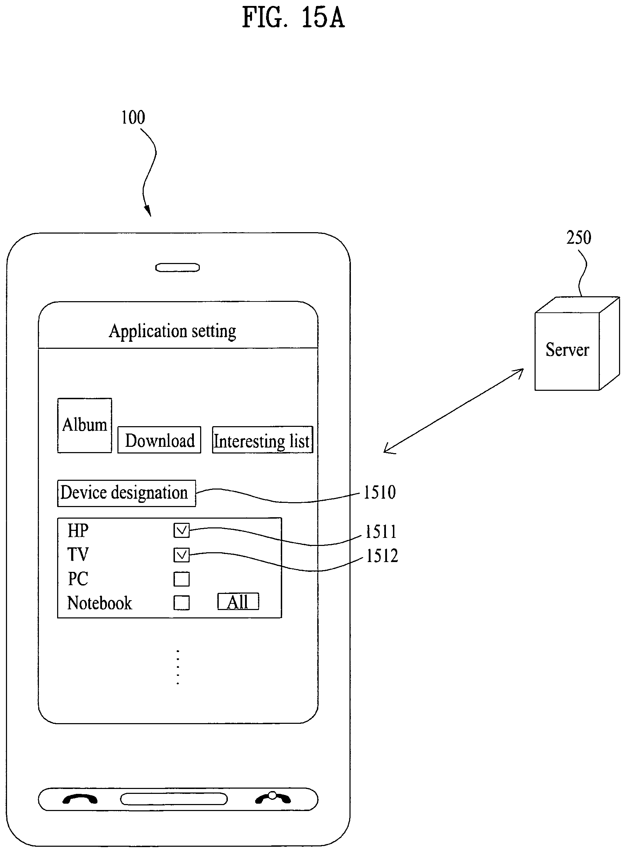

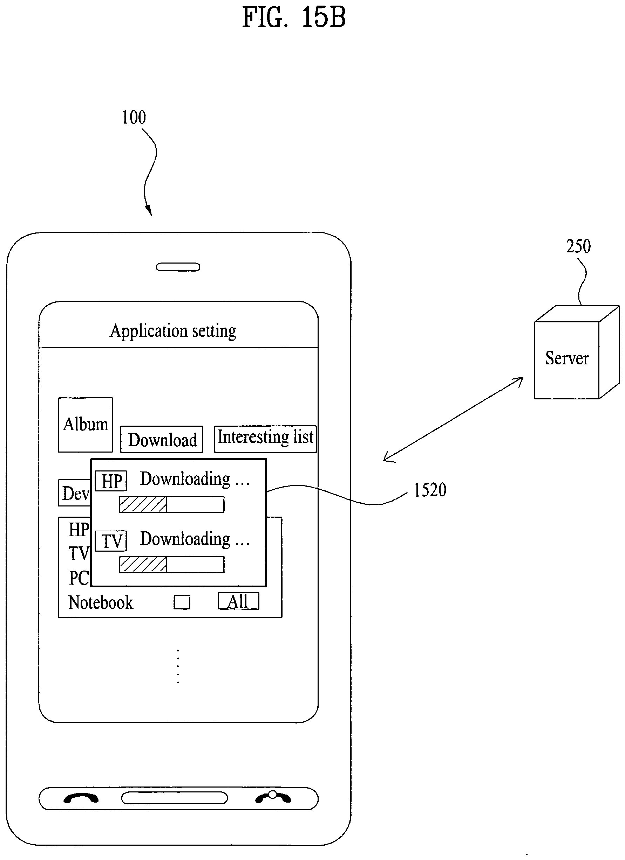

FIG. 15A and FIG. 15B illustrate examples of screen configurations for designating a sharing target device when downloading an application.

Referring to FIG. 15A, when receiving a specific application from a server 250, the mobile terminal 100 may designate a target device as a location for downloading the application. For example, after a device designation icon 1510 has been selected, the mobile terminal 100 may designate a HP 1511 and a TV 1512 as the devices to download the specific application.

Referring to FIG. 15B, the mobile terminal 100 may display a window 1520 indicating a downloaded level for each of the designated devices. Additionally, after downloading an application on the mobile terminal 100, the share icon may be displayed in order to share the downloaded application. The share icon may also be displayed while the download of the application is in progress. For example, after selecting an application to be downloaded a user of the mobile terminal 100 may select other devices to receive the same application or other devices to share the application information of the downloaded program. The selection of the other devices may occur prior to the download, while the download is in progress or after completion of the download process.

According to another embodiment, the mobile terminal 100 may control a specific application corresponding to the specific application icon to run in another device when a specific application icon is selected.

Specifically, the mobile terminal 100 transmits a run command signal for a specific application to a device in response to a user selection of an application icon. Having received the run command signal for the specific application, the device may run the specific application. Thereafter, the mobile terminal 100 may control the running application on the device.

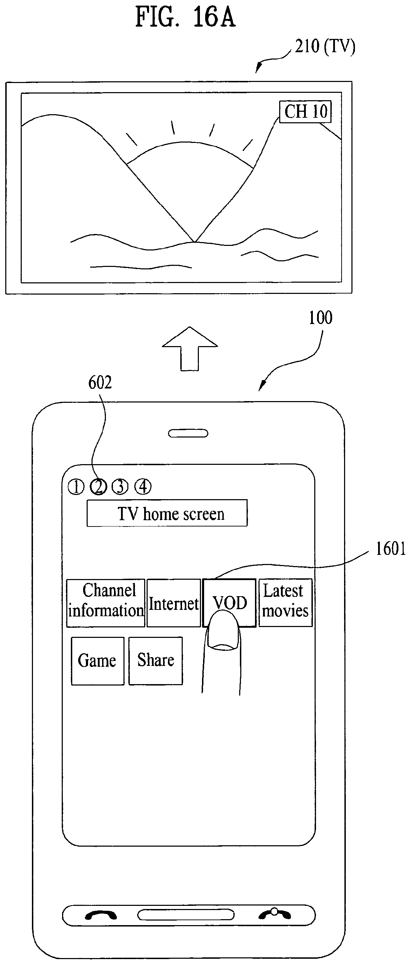

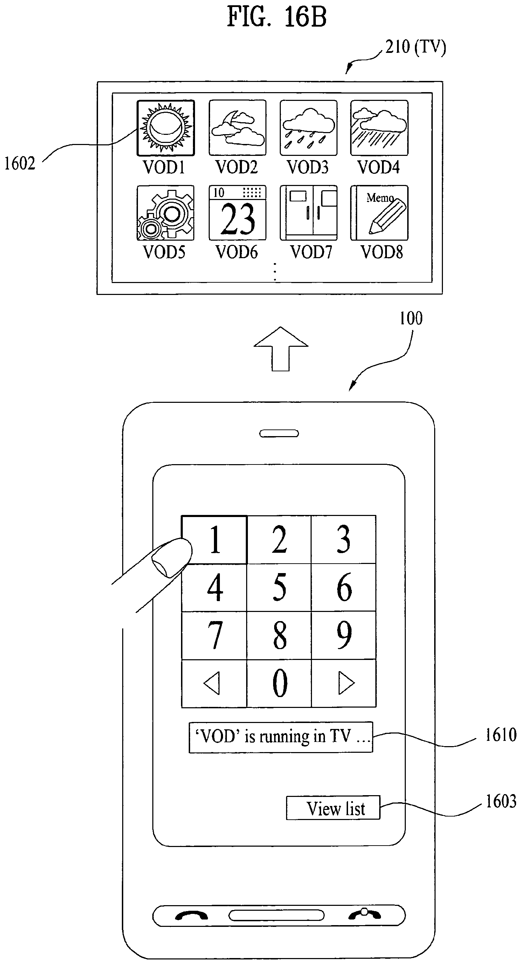

FIG. 16A and FIG. 16B illustrate examples of screen configurations for controlling an application on another device via a mobile terminal.

Referring to FIG. 16A, the mobile terminal 100 receives a selection input on a specific application icon, such as the VOD icon 1601 and transmits a run command signal for the application corresponding to the application icon 1601 to a device, such as the TV 210.

Referring to FIG. 16B, as an example, the TV 210 runs the application corresponding to the VOD icon 1601 and may display a VOD list. Furthermore, the mobile terminal 100 may be an input and control device for the application corresponding to the VOD 1601 and may display a screen for receiving an input.

For example, in order to receive an input to select a specific VOD in the VOD list, the mobile terminal 100 may display a numeral keypad. If a numeral key 1 is selected, a first VOD 1602 on the VOD list can be selected. Moreover, while a specific VOD is played, key zones, such as a rewind key zone, a fast forward key zone, a pause key zone, a stop key zone, for controlling play states can be displayed on the screen.

In some scenarios, when execution of a specific application is terminated, the mobile terminal 100 enables a user to select an option to share the specific application. Alternatively, the mobile terminal 100 may share the specific application during execution of the specific application, the specific application will be shared during execution of the application.

As described above, a user is allowed to share application information with a plurality of devices. Specifically, an application icon of each of a plurality of the devices is displayed on a prescribed device, such as a mobile terminal, whereby a user may be informed of the applications set on each of a plurality of the devices.

Additionally, a user may control the application sharing settings sharing target device without direct manipulation of the sharing target device. Furthermore, a user may share common settings and manage specific applications for a plurality of devices via a sharing icon.

## Claims

1. A mobile terminal (100), comprising:
a wireless communication unit (110) configured to wirelessly communicate with at least one other terminal;
a touchscreen (151) configured to display information related to the mobile terminal; and
a controller (180) configured to identify the at least one other terminal as a sharing terminal within a predetermined distance of the mobile terminal and to pair the sharing terminal with the mobile terminal,
wherein the controller is further configured to:
control the touchscreen to display a sharing condition User Interface, UI, that facilitates setting at least one sharing condition, the at least one sharing condition including a sharing time period for sharing information of a first application;
control the wireless communication to share the information of the first application with the sharing terminal during the sharing time period set via the UI;
control the touchscreen to display a first indicator (1301) by using information of the first application on a home screen, the first indicator distinguishing the first application that is shared between the mobile terminal and the sharing terminal and identifying the first application and the sharing terminal;
control the touchscreen to display a sharing icon (610) on the home screen;
when the first indicator is touched and dragged into the sharing icon, control the wireless communication unit to share the first application corresponding to the first indicator with the sharing terminal;
control the touchscreen to display, on the home screen, first text information (1310) indicating that the first application corresponding to the first indicator is shared with the sharing terminal;
control the touchscreen to display a window (1210) on the home screen in response to a selection of the sharing icon, the window including the first indicator and second indicator (1212) corresponding to second application pre-shared with the sharing terminal; and
when one (1212) of the first and second indicators within the window is touched and dragged toward an outside of the window, cancel the sharing of a shared application corresponding to the touched and dragged indicator (1212); and
when the sharing of the shared application corresponding to the touched and dragged indicator (1212) is cancelled, control the touchscreen to stop the displaying of the window on the home screen, to display the touched and dragged indicator (1212) on the home screen, and to display second text information (1410) indicating that the sharing of the shared application corresponding to the touched and dragged indicator (1212) is cancelled.

2. The mobile terminal of claim 1, wherein the mobile terminal is further configured to share a screen with the sharing terminal, the controller controls the touchscreen to display the shared screen of the sharing terminal on the mobile terminal and the controller controls the touchscreen to display an icon to distinguish the shared screen of the sharing terminal.

3. The mobile terminal of claim 1, wherein a third application is simultaneously downloaded on the paired sharing terminal when the mobile terminal downloads the third application, and
wherein the third application is accessed by the paired sharing terminal when a user selects the sharing icon which appears after the third application has been downloaded.

4. The mobile terminal of claim 1, wherein the controller identifies the sharing terminal and pairs the mobile terminal and the sharing terminal after executing the first application on the mobile terminal.

5. The mobile terminal of claim 1, wherein the mobile terminal controls a third application on the paired sharing terminal when the third application is only installed on the sharing terminal.

6. The mobile terminal of claim 1, wherein the controller configured to download and install a third application on the mobile terminal, and to control the touchscreen to display an icon for the downloaded third application on the mobile terminal and the sharing icon associated with the third application after the third application is installed, wherein the paired sharing terminal is given access to the third application when a user selects the sharing icon.

7. The mobile terminal of claim 6, wherein the paired sharing terminal downloads and installs the third application when given access by the mobile terminal.

8. The mobile terminal of claim 6, wherein the third application is simultaneously downloaded on the paired sharing terminal when the mobile terminal downloads the third application.

9. The mobile terminal of claim 6, wherein the third application is accessed by the paired sharing terminal when a user selects the sharing icon which appears after the third application has been downloaded.

10. A method of sharing application information on a mobile terminal (100), the method comprising:
identifying (S310) a sharing terminal within a predetermined distance of the mobile terminal;
pairing (S310) the sharing terminal with the mobile terminal in order to share a first application with each other after pairing;
wherein the method is further comprising the steps of:
displaying a sharing condition User Interface, UI, that facilitates setting at least one sharing condition, the at least one sharing condition including a sharing time period for sharing information of the first application;
sharing information of the first application with the sharing terminal during the sharing time period set via the UI;
displaying a first indicator (1301) by using information of the first application on a home screen, the first indicator distinguishing the first application that is shared between the mobile terminal and the sharing terminal and identifying the first application and the sharing terminal;
displaying a sharing icon (610) on the home screen;
when the first indicator is touched and dragged into the sharing icon, sharing the first application corresponding to the first indicator with the sharing terminal;
displaying, on the home screen, first text information (1310) indicating that the first application corresponding to the first indicator is shared with the sharing terminal;
displaying a window (1210) on the home screen in response to a selection of the sharing icon, the window including the first indicator and second indicator (1212) corresponding to second application pre-shared with the sharing terminal; and
when one (1212) of the first and second indicators within the window is touched and dragged toward an outside of the window, cancelling the sharing of a shared application corresponding to the touched and dragged indicator (1212); and
when the sharing of the shared application corresponding to the touched and dragged indicator (1212) is cancelled, stopping the displaying of the window on the home screen, displaying the touched and dragged indicator (1212) on the home screen, and displaying, on the home screen, second text information (1410) indicating that the sharing of the shared application corresponding the touched and dragged indicator (1212) is cancelled.

11. The method of claim 10, further comprising:
sharing a screen with the sharing terminal; and
displaying the shared screen of the sharing terminal on a touchscreen (151) of the mobile terminal.

12. The method of claim 11, further comprising:
displaying an icon to distinguish the shared screen of the sharing terminal.

13. The method of claim 10, further comprising:
simultaneously downloading a third application on the paired sharing terminal when the mobile terminal downloads the third application;
accessing the third application by the paired sharing terminal when a user selects the sharing icon which appears after the third application has been downloaded;
identifying the sharing terminal and pairs the mobile terminal and the sharing terminal during the start-up of the mobile terminal;
identifying the sharing terminal and pairing the mobile terminal and the sharing terminal after executing the first application on the mobile terminal; and
controlling the third application on the paired sharing terminal when the third application is only installed on the sharing terminal.

14. The method of claim 10, further comprising:
downloading and installing a third application on the mobile terminal; and
displaying an icon for the downloaded third application on the mobile terminal and the sharing icon associated with the third application after the third application is installed,
wherein the paired sharing terminal is given access to the third application when a user selects the sharing icon.

15. The method of claim 13, further comprising:
downloading and installing the third application on the paired sharing terminal when given access by the mobile terminal;
simultaneously downloading the third application on the paired sharing terminal when the mobile terminal downloads the third application;
accessing the third application by the paired sharing terminal when a user selects the sharing icon which appears after the third application has been downloaded; and
identifying the sharing terminal and pairing the mobile terminal and the sharing terminal during the start-up of the mobile terminal.

## Patentansprüche

1. Mobiles Endgerät (100), mit:
einer Drahtloskommunikationseinheit (110), die zum drahtlosen Kommunizieren mit zumindest einem anderen Endgerät eingerichtet ist,
einem Berührungsbildschirm (151), der dazu eingerichtet ist, dem mobilen Endgerät zugehörige Informationen anzuzeigen, und
einer Steuereinheit (180), die dazu eingerichtet ist, das zumindest eine andere Endgerät als ein Mitbenutzungsendgerät innerhalb eines vorbestimmten Abstands von dem mobilen Endgerät zu identifizieren und das Mitbenutzungsendgerät mit dem mobilen Endgerät zu paaren,
wobei die Steuereinheit ferner eingerichtet ist zum:
Steuern des Berührungsbildschirms zum Anzeigen einer Mitbenutzungsbedingungsbenutzerschnittstelle, UI, die ein Einstellen zumindest einer Mitbenutzungsbedingung erleichtert, wobei die zumindest eine Mitbenutzungsbedingung eine Mitbenutzungszeitdauer zum Teilen von Informationen einer ersten Anwendung beinhaltet,
Steuern der Drahtloskommunikation zum Teilen der Informationen der ersten Anwendung mit dem Mitbenutzungsendgerät während der mittels der UI eingestellten Mitbenutzungszeitdauer,
Steuern des Berührungsbildschirms zum Anzeigen eines ersten Indikators (1301) auf einem Startbildschirm durch Verwenden von Informationen der ersten Anwendung, wobei der erste Indikator die erste Anwendung kenntlich macht, die zwischen dem mobilen Endgerät und dem Mitbenutzungsendgerät geteilt wird, und die erste Anwendung und das Mitbenutzungsendgerät identifiziert,
Steuern des Berührungsbildschirms zum Anzeigen eines Teilungssymbols (610) auf dem Startbildschirm,
Steuern, wenn der erste Indikator berührt und in das Teilungssymbol gezogen wird, der Drahtloskommunikationseinheit zum Teilen der dem ersten Indikator entsprechenden ersten Anwendung mit dem Mitbenutzungsendgerät,
Steuern des Berührungsbildschirms zum Anzeigen, auf dem Startbildschirm, erster Textinformation (1310), welche angibt, dass die dem ersten Indikator entsprechende erste Anwendung mit dem Mitbenutzungsendgerät geteilt wird,
Steuern des Berührungsbildschirms zum Anzeigen eines Fensters (1210) auf dem Startbildschirm in Reaktion auf eine Auswahl des Teilungssymbols, wobei das Fenster den ersten Indikator und einen zweiten Indikator (1212) enthält, der einer vorab mit dem Mitbenutzungsendgerät geteilten, zweiten Anwendung entspricht, und wenn einer (1212) des ersten und zweiten Indikators innerhalb des Fensters berührt und zu einer Außenseite des Fensters gezogen wird, Aufheben des Teilens einer dem berührten und gezogenen Indikator (1212) entsprechenden geteilten Anwendung, und
wenn das Teilen der dem berührten und gezogenen Indikator (1212) entsprechenden geteilten Anwendung aufgehoben ist, Steuern des Berührungsbildschirms zum Beenden des Anzeigens des Fensters auf dem Startbildschirm, Anzeigen des berührten und gezogenen Indikators (1212) auf dem Startbildschirm und Anzeigen zweiter Textinformation (1410), welche angibt, dass das Teilen der dem berührten und gezogenen Indikator (1212) entsprechenden geteilten Anwendung aufgehoben ist.

2. Mobiles Endgerät nach Anspruch 1, wobei das mobile Endgerät ferner dazu eingerichtet ist, einen Bildschirm mit dem Mitbenutzungsendgerät zu teilen, wobei die Steuereinheit den Berührungsbildschirm dazu steuert, den geteilten Bildschirm des Mitbenutzungsendgeräts auf dem mobilen Endgerät anzuzeigen, und die Steuereinheit den Berührungsbildschirm dazu steuert, ein Symbol anzuzeigen, um den geteilten Bildschirm des Mitbenutzungsendgeräts kenntlich zu machen.

3. Mobiles Endgerät nach Anspruch 1, wobei eine dritte Anwendung gleichzeitig auf das gepaarte Mitbenutzungsendgerät heruntergeladen wird, wenn das mobile Endgerät die dritte Anwendung herunterlädt, und
wobei das gepaarte Mitbenutzungsendgerät auf die dritte Anwendung zugreift, wenn ein Benutzer das Teilungssymbol auswählt, welches erscheint, nachdem die dritte Anwendung heruntergeladen worden ist.

4. Mobiles Endgerät nach Anspruch 4, bei dem die Steuereinheit das Mitbenutzungsendgerät identifiziert und das mobile Endgerät und das Mitbenutzungsendgerät nach Ausführen der ersten Anwendung auf dem mobilen Endgerät paart.

5. Mobiles Endgerät nach Anspruch 1, wobei das mobile Endgerät eine dritte Anwendung auf dem gepaarten Mitbenutzungsendgerät steuert, wenn die dritte Anwendung ausschließlich auf dem Mitbenutzungsendgerät installiert ist.

6. Mobiles Endgerät nach Anspruch 1, bei dem die Steuereinheit dazu eingerichtet ist, eine dritte Anwendung herunterzuladen und auf dem mobilen Endgerät zu installieren und den Berührungsbildschirm dazu zu steuern, ein Symbol für die heruntergeladene dritte Anwendung auf dem mobilen Endgerät und das der dritten Anwendung zugehörige Teilungssymbol anzuzeigen, nachdem die dritte Anwendung installiert worden ist, wobei dem gepaarten Mitbenutzungsendgerät ein Zugang zu der dritten Anwendung gewährt wird, wenn ein Benutzer das Teilungssymbol auswählt.

7. Mobiles Endgerät nach Anspruch 6, wobei das gepaarte Mitbenutzungsendgerät die dritte Anwendung herunterlädt und installiert, wenn ihm durch das mobile Endgerät Zugang gewährt wird.

8. Mobiles Endgerät nach Anspruch 6, wobei die dritte Anwendung gleichzeitig auf das gepaarte Mitbenutzungsendgerät heruntergeladen wird, wenn das mobile Endgerät die dritte Anwendung herunterlädt.

9. Mobiles Endgerät nach Anspruch 6, wobei das gepaarte Mitbenutzungsendgerät auf die dritte Anwendung zugreift, wenn ein Benutzer das Teilungssymbol auswählt, welches erscheint, nachdem die dritte Anwendung heruntergeladen worden ist.

10. Verfahren zum Teilen von Anwendungsinformation auf einem mobilen Endgerät (100), wobei das Verfahren umfasst:
Identifizieren (S310) eines Mitbenutzungsendgeräts innerhalb eines vorbestimmten Abstands von dem mobilen Endgerät,
Paaren (S310) des Mitbenutzungsendgeräts mit dem mobilen Endgerät zum gegenseitigen Teilen einer ersten Anwendung nach dem Paaren,
wobei das Verfahren ferner die Schritte umfasst:
Anzeigen einer Mitbenutzungsbedingungsbenutzerschnittstelle, UI, die ein Einstellen zumindest einer Mitbenutzungsbedingung erleichtert, wobei die zumindest eine Mitbenutzungsbedingung eine Mitbenutzungszeitdauer zum Teilen von Informationen der ersten Anwendung beinhaltet,
Teilen von Informationen der ersten Anwendung mit dem Mitbenutzungsendgerät während der über die UI eingestellten Mitbenutzungszeitdauer,
Anzeigen eines ersten Indikators (1301) auf einem Startbildschirm durch Verwenden von Informationen der ersten Anwendung, wobei der erste Indikator die erste Anwendung kenntlich macht, die zwischen dem mobilen Endgerät und dem Mitbenutzungsendgerät geteilt wird, und die erste Anwendung und das Mitbenutzungsendgerät identifiziert,
Anzeigen eines Teilungssymbols (610) auf dem Startbildschirm,
Teilen der dem ersten Indikator entsprechenden ersten Anwendung mit dem Mitbenutzungsendgerät, wenn der erste Indikator berührt und in das Teilungssymbol gezogen wird,
Anzeigen, auf dem Startbildschirm, erster Textinformation (1310), die angibt, dass die dem ersten Indikator entsprechende erste Anwendung mit dem Mitbenutzungsendgerät geteilt wird,
Anzeigen eines Fensters (1210) auf dem Startbildschirm in Reaktion auf eine Auswahl des Teilungssymbols, wobei das Fenster den ersten Indikator und einen zweiten Indikator (1212) enthält, der einer zweiten, vorab mit dem Mitbenutzungsendgerät geteilten Anwendung entspricht, und
wenn einer (1212) der ersten und zweiten Indikatoren innerhalb des Fensters berührt und zu einer Außenseite des Fensters gezogen wird, Aufheben des Teilens einer dem berührten und gezogenen Indikator (1212) entsprechenden, geteilten Anwendung, und
wenn das Teilen der dem berührten und gezogenen Indikator (1212) entsprechenden, geteilten Anwendung aufgehoben ist, Beenden des Anzeigens des Fensters auf dem Startbildschirm, Anzeigen des berührten und gezogenen Indikators (1212) auf dem Startbildschirm und Anzeigen, auf dem Startbildschirm, zweiter Textinformation (1410), welche angibt, dass das Teilen der dem berührten und gezogenen Indikator (1212) entsprechenden, geteilten Anwendung aufgehoben ist.

11. Verfahren nach Anspruch 10, ferner umfassend:
Teilen eines Bildschirms mit dem Mitbenutzungsendgerät, und
Anzeigen des geteilten Bildschirms des Mitbenutzungsendgeräts auf einem Berührungsbildschirm (151) des mobilen Endgeräts.

12. Verfahren nach Anspruch 11, ferner umfassend:
Anzeigen eines Symbols, um den geteilten Bildschirm des Mitbenutzungsendgeräts kenntlich zu machen.

13. Verfahren nach Anspruch 10, ferner umfassend:
gleichzeitiges Herunterladen einer dritten Anwendung auf das gepaarte Mitbenutzungsendgerät, wenn das mobile Endgerät die dritte Anwendung herunterlädt,
Zugreifen des gepaarten Mitbenutzungsendgeräts auf die dritte Anwendung wenn ein Benutzer das Teilungssymbol auswählt, welches erscheint, nachdem die dritte Anwendung heruntergeladen worden ist,
Identifizieren des Mitbenutzungsendgeräts und Paaren des mobilen Endgeräts und des Mitbenutzungsendgeräts während des Hochfahrens des mobilen Endgeräts,
Identifizieren des Mitbenutzungsendgeräts und Paaren des mobilen Endgeräts und des Mitbenutzungsendgeräts nach Ausführen der ersten Anwendung auf dem mobilen Endgerät, und
Steuern der dritten Anwendung auf dem gepaarten Mitbenutzungsendgerät, wenn die dritte Anwendung ausschließlich auf dem Mitbenutzungsendgerät installiert ist.

14. Verfahren nach Anspruch 10, ferner umfassend:
Herunterladen und Installieren einer dritten Anwendung auf dem mobilen Endgerät, und
Anzeigen eines Symbols für die heruntergeladene dritte Anwendung auf dem mobilen Endgerät und des der dritten Anwendung zugehörigen Teilungssymbols, nachdem die dritte Anwendung installiert ist,
wobei dem gepaarten Mitbenutzungsendgerät Zugang zur dritten Anwendung gewährt wird, wenn ein Benutzer das Teilungssymbol auswählt.

15. Verfahren nach Anspruch 13, ferner umfassend:
Herunterladen und Installieren der dritten Anwendung auf dem gepaarten Mitbenutzungsendgerät, wenn durch das mobile Endgerät Zugang gewährt wird,
gleichzeitiges Herunterladen der dritten Anwendung auf das gepaarte Mitbenutzungsendgerät, wenn das mobile Endgerät die dritte Anwendung herunterlädt,
Zugreifen des gepaarten Mitbenutzungsendgeräts auf die dritte Anwendung, wenn ein Benutzer das Teilungssymbol auswählt, welches erscheint, nachdem die dritte Anwendung heruntergeladen worden ist, und
Identifizieren des Mitbenutzungsendgeräts und Paaren des mobilen Endgeräts und des Mitbenutzungsendgeräts während des Hochfahrens des mobilen Endgeräts.

## Revendications

1. Terminal mobile (100) comprenant :
une unité de communication sans fil (110) conçue pour la communication sans fil avec au moins un autre terminal ;
un écran tactile (151) conçu pour afficher des informations concernant le terminal mobile ; et
un organe de commande (180) conçu pour identifier ledit autre terminal comme un terminal de partage à une distance prédéfinie du terminal mobile et pour apparier le terminal de partage au terminal mobile,
l'organe de commande étant en outre conçu pour :
ordonner à l'écran tactile d'afficher une interface utilisateur, UI, d'état de partage, qui facilite la définition d'au moins un état de partage, ledit état de partage comprenant une période de temps de partage pour partager les informations d'une première application ;
ordonner à l'unité de communication sans fil de partager les informations de la première application avec le terminal de partage pendant la période de temps de partage définie par l'intermédiaire de l'UI ;
ordonner à l'écran tactile d'afficher un premier indicateur (1301) au moyen d'informations de la première application sur un écran d'accueil, le premier indicateur distinguant la première application qui est partagée entre le terminal mobile et le terminal de partage et identifiant la première application et le terminal de partage ;
ordonner à l'écran tactile d'afficher une icône de partage (610) sur l'écran d'accueil ;
lorsque le premier indicateur est touché et glissé dans l'icône de partage, ordonner à l'unité de communication sans fil de partager la première application correspondant au premier indicateur avec le terminal mobile ;
ordonner à l'écran tactile d'afficher, sur l'écran d'accueil, des premières informations de texte (1310) indiquant que la première application correspondant au premier indicateur est partagé avec le terminal de partage ;
ordonner à l'écran tactile d'afficher une fenêtre (1210) sur l'écran d'accueil en réponse à une sélection de l'icône de partage, la fenêtre comprenant le premier indicateur et le second indicateur (1212) correspondant à la seconde application partagée préalablement avec le terminal de partage ; et
lorsque l'un (1212) des premier et second indicateurs dans la fenêtre est touché et glissé à l'extérieur de la fenêtre, supprimer le partage d'une application partagée correspondant à l'indicateur touché et glissé (1212) ; et
lorsque le partage de l'application partagée correspondant à l'indicateur touché et glissé (1212) est supprimé, ordonner à l'écran tactile d'arrêter l'affichage de la fenêtre sur l'écran d'accueil, pour afficher l'indicateur touché et glissé (1212) sur l'écran d'accueil, et pour afficher des secondes informations de texte (1410) indiquant que le partage de l'application partagée correspondant à l'indicateur touché et glissé (1212) est supprimé.

2. Terminal mobile selon la revendication 1, le terminal mobile étant en outre conçu pour partager un écran avec le terminal de partage, l'organe de commande ordonnant à l'écran tactile d'afficher l'écran partagé du terminal de partage sur le terminal mobile et l'organe de commande ordonnant l'écran tactile d'afficher une icône pour distinguer l'écran partagé du terminal de partage.

3. Terminal mobile selon la revendication 1, une troisième application étant simultanément téléchargée sur le terminal de partage apparié lorsque le terminal mobile télécharge la troisième application, et
le terminal de partage apparié accédant à la troisième application lorsqu'un utilisateur sélectionne l'icône de partage qui apparaît après que la troisième application a été téléchargée.

4. Terminal mobile selon la revendication 1, l'organe de commande identifiant le terminal de partage et appariant le terminal mobile et le terminal de partage après l'exécution de la première application sur le terminal mobile.

5. Terminal mobile selon la revendication 1, le terminal mobile commandant une troisième application sur le terminal de partage apparié lorsque la troisième application est uniquement installée sur le terminal de partage.

6. Terminal mobile selon la revendication 1, l'organe de commande conçu pour télécharger et installer une troisième application sur le terminal mobile, et pour ordonner à l'écran tactile d'afficher une icône pour la troisième application téléchargée sur le terminal mobile et l'icône de partage associée à la troisième application après que la troisième application a été installée, le terminal de partage apparié étant donné l'accès à la troisième application lorsqu'un utilisateur sélectionne l'icône de partage.

7. Terminal mobile selon la revendication 6, le terminal de partage apparié téléchargeant et installant la troisième application lorsqu'il obtient l'accès par le terminal mobile.

8. Terminal mobile selon la revendication 6, la troisième application étant simultanément téléchargée sur le terminal de partage apparié lorsque le terminal mobile télécharge la troisième application.

9. Terminal mobile selon la revendication 6, le terminal de partage apparié ayant accès à la troisième application lorsqu'un utilisateur sélectionne l'icône de partage qui apparaît après que la troisième application a été téléchargée.

10. Procédé de partage d'informations sur un terminal mobile (100), le procédé consistant à :
identifier (S310) un terminal mobile à une distance prédéfinie par rapport au terminal mobile ;
apparier (S310) le terminal de partage avec le terminal mobile afin de partager une première application l'un avec l'autre après l'appariement ;
le procédé comprenant en outre les étapes consistant à :
afficher une interface utilisateur d'état de partage, UI, qui facilite la définition d'au moins un état de partage ledit état de partage comprenant une période de temps de partage pour partager les informations de la première application ;
partager les informations de la première application avec le terminal de partage pendant la période de temps de partage définie par l'intermédiaire de l'UI ;
afficher un premier indicateur (1301) à l'aide des informations de la première application sur un écran d'accueil, le premier indicateur distinguant la première application qui est partagée entre le terminal mobile et le terminal de partage et identifier la première application et le terminal de partage ;
afficher une icône de partage (610) sur l'écran d'accueil ;
lorsque le premier indicateur est touché et glissé dans l'icône de partage, partager, la première application correspondant au premier indicateur avec le terminal mobile ;
afficher, sur l'écran d'accueil, des premières informations de texte (1310) indiquant que la première application correspondant au premier indicateur est partagé avec le terminal de partage ;
afficher une fenêtre (1210) sur l'écran d'accueil en réponse à une sélection d'icône de partage, la fenêtre comprenant le premier indicateur et le second indicateur (1212) correspondant à la deuxième application partagée préalablement avec le terminal de partage ; et
lorsque l'un (1212) des premier et second indicateurs dans la fenêtre est touché et glissé à l'extérieur de la fenêtre, supprimer le partage d'une application partagée correspondant à l'indicateur touché et glissé (1212) ; et
lorsque le partage de l'application partagée correspondant à l'indicateur touché et glissé (1212) est supprimé, arrêter l'affichage de la fenêtre sur l'écran d'accueil, afficher l'indicateur touché et glissé (1212) sur l'écran d'accueil, et afficher, sur l'écran d'accueil, des secondes informations de texte (1410) indiquant que le partage de l'application partagée correspondant à l'indicateur touché et glissé (1212) est supprimé.

11. Procédé selon la revendication 10, consistant en outre à :
partager un écran avec le terminal mobile ; et
afficher l'écran partagé du terminal de partage sur un écran tactile (151) du terminal mobile.

12. Procédé selon la revendication 11, consistant en outre à :
afficher une icône pour distinguer l'écran partagé du terminal de partage.

13. Procédé selon la revendication 10, consistant en outre à :
télécharger simultanément une troisième application sur le terminal de partage apparié lorsque le terminal mobile télécharge la troisième application ;
accéder à la troisième application par le terminal de partage apparié lorsqu'un utilisateur sélectionne l'icône de partage qui apparaît après que la troisième application a été téléchargée ;
identifier le terminal de partage et apparier le terminal mobile et le terminal de partage pendant le démarrage du terminal mobile ;
identifier le terminal de partage et apparier le terminal mobile et le terminal de partage après l'exécution de la première application sur le terminal mobile ; et
commander la troisième application sur le terminal de partage apparié lorsque la troisième application est uniquement installée sur le terminal de partage.

14. Procédé selon la revendication 10, consistant en outre à :
télécharger et installer une troisième application sur le terminal mobile ; et
afficher une icône pour la troisième application téléchargée sur le terminal mobile et l'icône de partage associée à la troisième application après que la troisième application a été installée,
le terminal de partage apparié ayant obtenu l'accès à la troisième application lorsqu'un utilisateur sélectionner l'icône de partage.

15. Procédé selon la revendication 13, consistant en outre à :
télécharger et installer la troisième application sur le terminal de partage apparié lorsqu'il a obtenu l'accès par le terminal mobile ;
télécharger simultanément la troisième application sur le terminal de partage apparié lorsque le terminal mobile télécharge la troisième application ;
accéder à la troisième application par le terminal de partage apparié lorsqu'un utilisateur sélectionne l'icône de partage qui apparait après que la troisième application a été téléchargée ; et
identifier le terminal de partage et apparier le terminal mobile et le terminal de partage pendant le démarrage du terminal mobile.
